# EUROPEAN PATENT APPLICATION

(11) **EP 3 943 534 A1**
(43) Date of publication of application: **26.01.2022**
(21) Application number: 20305848.2
(22) Date of filing: 23.07.2020
(51) Int. Cl.: C08J 11/04, C08K 5/00

(54) **USE OF RED TO NEAR-INFRARED HEAT-GENERATING ORGANIC DYES FOR REPROCESSING/RECYCLING POLYMERS**

(71) Applicant: Université de Haute Alsace, 68200 Mulhouse (FR); Centre National de la Recherche Scientifique, 75016 Paris (FR); Université d'Aix-Marseille, 13007 Marseille (FR)
(72) Inventor: LALEVÉE, Jacques, 68200 Mulhouse (FR); LAUNAY, Valentin, 68800 Thann (FR); CARON, Aurore, 68200 Mulhouse (FR); NOIRBENT, Guillaume, 95220 Herblay (FR); DUMUR, Frédéric, 72400 La Ferté-Bernard (FR); GIGMES, Didier, 13190 Allauch (FR)
(74) Representative: Novagraaf Technologies

(57) **Abstract**

The present invention relates to a process for bringing a polymer composition above a threshold temperature on demand, wherein:
the polymer composition comprises 0,01 to 0,5% weight of at least one heat-generating organic dye that generates heat above the threshold temperature when exposed to a given range of red to near-infrared irradiation, and
the process comprises exposing the polymer composition to red to near-infrared irradiation at a wavelength within the red to near-infrared range where the heat-generating organic dye generates heat above the threshold temperature, the weight % being expressed with respect to the total weight of the polymer composition. The threshold temperature may be the glass transition temperature, the depolymerization temperature, the melting temperature, or the decomposition temperature of the polymer composition.

The invention also relates to the use of a heat-generating organic dye adsorbing in the red to near-infrared, for reshaping a thermoplastic polymer article; bonding together two thermoplastic polymer or elastomer articles; separating two pieces of a thermoplastic polymer or elastomer article; self-healing or self-repairing a thermoplastic polymer article; recycling a composite polymer composition; recycling or depolymerizing a polymer; and/or separating two articles bonded by a polymer layer.

## Description

### FIELD OF THE INVENTION

The present invention relates to a method for inducing physico-chemical modification of a polymer composition on demand, and its use for reprocessing/recycling polymers. In what follows, the numbers between brackets ([]) refer to the List of References provided at the end of the document.

### BACKGROUND OF THE INVENTION

The use of plastic is widespread and worldwide. In fact, the global plastic production has increased up to more than 4000% between 1960 to 2013. The low cost and the high versatility of plastics leads us to believe that this global plastic production will continue to grow (or at least stagnate) in the future. Unfortunately, the reprocessing, recycling and recovering of plastics cannot match this huge consumption which engenders high environmental problematics. However, plastic reprocessing or recycling is of crucial interest and the proportion of recycling, recovering and landfilling drastically evolves since 2007. To illustrate this, in 2018, 32.5% of plastics wastes were recycled (against 20.4% in 2007), 42.6% were recovered (against 29.2% in 2007) and 24.9% were landfilled (against 50.4% in 2007). The recycling and recovering of plastics can be separated in four different categories.
1) The first category is the most environmentally friendly and concerns the plastics recycled by re-extrusion, also called closed-loop recycling. By using this recycling method, properties of the recycled plastics are quite similar to those of the raw plastic. Therefore, the latter can be replaced by the recycled plastic.
2) Category where properties of the recycled plastic will be degraded as mechanical processes are involved. To overcome this drawback, new components can be added such as raw plastics or fillers to restore the mechanical properties.
3) Chemical processes in which the polymer bonds are cleaved by depolymerization or by the use of high reaction temperatures. As a result of this, products derived from these chemical processes can be employed as feedstock for the fabrication of new plastics or chemicals.
4) Category called energy recovering which consists in incinerating the plastic wastes in order to produce heat or electricity. However, the quantity of CO₂ released during this process is a major drawback in the current context of global warming.

Thermoplastics constitute around 80% of the plastic wastes generated throughout the world so that their recycling is the keypoint to avoid the landfilling of plastic wastes.

Self-healing is a good way to improve the lifetime of polymers and to reduce their maintenance costs, notably for the healing of cracks. Various strategies have been developed to reach these self-healing properties but all of them require high temperatures to be reached. For instance, PU-based polymers showed good self-healing properties upon heating and it is possible to use a small crosslinker presenting hydroxyl groups to improve reversibility of the bond formation or to use the Diels-Alder reaction which provides an excellent thermal reversibility. Fusible thermoplastic polycaprolactone fibers or polystyrene can also be inserted into the matrix. Under the influence of heat, they will melt and flow to heal the scratch. Another existing way to get self-healing properties is to incorporate graphene oxide or nanoparticles into the polymers to produce an efficient photothermal effect which will lead to the melting of the polymer, providing its local deformation upon NIR light irradiation and resulting in healing of the scratch. It has notably been evidenced that both the nanoparticles concentration and the irradiance could have a dramatic influence on the temperature reached and thus drastically affect healing efficiency. However, this approach suffers the drawback of insoluble bodies (graphene oxide or nanoparticles) and hence non homogenous mixtures.

Therefore, there remains a need for the development of new systems and methods for more efficient recycling/reprocessing and self-healing of polymer compositions, which overcome the aforementioned disadvantages.

### BRIEF DESCRIPTION OF THE DRAWINGS

**Figure 1****.** Photopolymerization profiles (acrylate C=C function conversion versus irradiation time) for TMPTA samples in presence of SPBPO (1%_{wt}) and IR-813 at (1) 0%_{wt}, (2) 0.01%_{wt}, (3) 0.02%_{wt}, (4) 0.04%_{wt}, (5) 0.05%_{wt}, (6) 0.08%_{wt}, (7) 0.1%_{wt} and (8) 0.2%_{wt} ; 2 mm thick samples ; laminate ; irradiation upon laser diode at 405 nm (t=0 s, 450 mW.cm⁻²). Irradiation beginning at t = 4 s.
**Figure 2****.** (a) Temperature versus NIR irradiation time for TMPTA-based polymers under different irradiances of a NIR light source at 785 nm without additional NIR heater. (b) Temperature versus NIR irradiation time for TMPTA-based polymers under different irradiances of NIR irradiation at 785 nm and in the presence of IR-813 (0.1%_{wt}). (1) l=0.4 W.cm⁻²; (2) l=0.8 W.cm⁻²; (3) l=1.2W.cm⁻² ; (4) l=1.6 W.cm⁻² ; (5) l=2.4 W.cm⁻² ; (6) l=2.55 W.cm⁻². The irradiation starts from t = 0 s.
**Figure 3****.** Molar extinction coefficients of (1) IR-813 in acetonitrile and (2) SQ in toluene.
**Figure 4****.** Maximal temperatures reached by the TMPTA-based polymers for various heater concentrations under NIR irradiation at 785 nm (2.55 W.cm⁻²) on a (a) linear scale and on a (b) logarithmic scale for systems with (1) SQ and (2) IR-813.
**Figure 5****.** Photos before **(left)** and after NIR irradiation **(right)** of two Glyfoma-based thermoplastic polymers put in contact and irradiated from the top: **(a)** without heater (no bonding of the two polymer pellets), **(b)** with 0.05%_{wt} of SQ and **(c)** with 0.05%_{wt} of IR-813 upon NIR light irradiation at 785 nm and 2.55 W.cm⁻². The two polymers cannot be separated for **b)** and **c).**
**Figure 6****.** (A) spatial control of the temperature for the irradiation of a Glyfoma-based thermoplastic polymer observed by thermal imaging experiments; (B) use of this spatial control for the shaping of a thermoplastic under NIR irradiation.
**Figure 7****.** Self-healing of a scratched Glyfoma-based thermoplastic with 0.1%_{wt} of IR-813 upon NIR light irradiation at 785 nm and 2.55 W.cm⁻².
**Figure 8****.** Photopolymerization profiles (acrylate C=C function conversion versus irradiation time) for TMPTA samples in the presence of SPBPO (1%_{wt}) and SQ at (1) 0%_{wt}, (2) 0.01% _{wt}, (3) 0.02% wt, (4) 0.04% _{wt}, (5) 0.05% _{wt}, (6) 0.08% _{wt}, (7) 0.1% _{wt} and (8) 0.2% _{wt} ; 2 mm thick samples ; laminate ; irradiation upon a laser diode at 405 nm (t=0 s, 450 mW.cm⁻²). Beginning of irradiation at t = 3 s.
**Figure 9****.** (a) Temperature versus irradiation time for TMPTA-based polymers under different irradiances of NIR irradiation at 785 nm without additional heater. (b) Temperature versus time for TMPTA-based polymers under different irradiances of NIR light at 785 nm in the presence of SQ (0.1%_{wt}). (1) l=0.4 W.cm⁻² ; (2) l=0.8 W.cm⁻²; (3) l=1.2W.cm⁻² ; (4) l=1.6 W.cm⁻² ; (5) l=2.4 W.cm⁻²; (6) l=2.55 W.cm⁻². The irradiation starts from t = 0 s.

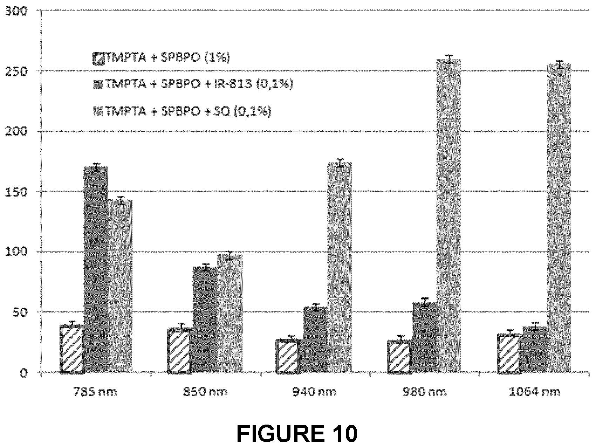

**Figure 10****.** Maximal temperature reached for the TMPTA-based polymers in the presence of heater (0.1%_{wt}) under several NIR wavelengths. The irradiance was 2.55 W.cm⁻² at 785 nm, 1 W.cm⁻² at 850 nm, 2.16 W.cm⁻² at 940 nm, 3.12 W.cm⁻² at 980 nm and 3.12 W.cm⁻² at 1064 nm.
**Figure 11****.** TGA graph under air of IR-813 from 30°C to 900°C with a rise in temperature of 10 K.min⁻¹ (a) and the associated derivative function (b).
**Figure 12****.** TGA graph under air of SQ from 30°C to 900°C with a rise in temperature of 10 K.min⁻¹ (a) and the associated derivative function (b).
**Figure 13****.** Photopolymerization profiles (acrylate C=C function conversion versus irradiation time) for Glyfoma-based samples in the presence of crayvallac SLT (1%_{wt}), SPBPO (2%_{wt}) and IR-813 at (1) 0%_{wt}, (2) 0.05% _{wt}, (3) 0.1%_{wt} ; 2 mm thick samples ; laminate ; irradiation upon a laser diode at 405 nm (t=0 s, 450 mW.cm⁻²). The irradiation starts from t = 2 s.
**Figure 14****.** (a) Temperature versus irradiation time for Glyfoma-based polymers under different irradiances of NIR irradiation at 785 nm without additional heater. (b) Temperature versus time for Glyfoma-based polymers under different irradiances of NIR light at 785 nm in presence of IR-813 (0.1%_{wt}). (1) l=0.4 W.cm⁻² ; (2) l=0.8 W.cm⁻²; (3) l=1.2W.cm⁻² ; (4) l=1.6 W.cm⁻²; (5) l=2 W.cm⁻². The irradiation starts from t = 0 s.
**Figure 15****.** DSC graph under air of Glyfoma-based polymer from 0°C to 200°C with a rise in temperature of 10 K.min⁻¹.
**Figure 16****.** DSC graph under air of Glyfoma-based polymer in the presence of IR-813 (0.05%_{wt}) from 0°C to 200°C with a rise in temperature of 10 K.min⁻¹.
**Figure 17****.** DSC graph under air of Glyfoma based polymer in the presence of SQ (0.05%_{wt}) from 0°C to 200°C with a rise in temperature of 10 K.min⁻¹.
**Figure 18****.** Temperature versus irradiation time for Glyfoma-based polymers under different irradiances of NIR irradiation at 980 nm in presence of SQ (0.1%_{wt}). The irradiation starts from t = 0 s.
**Figure 19****.** UV-vis diffusion of light for a polystyrene latex (112 nm of average diameter) and calculated light penetrations of selected photons.
**Figure 20****.** Examples of cyanine dyes useable in the context of the present invention.
**Figure 21****.** Examples of Squaraines and Squarylium dyes useable in the context of the present invention.
**Figure 22****.** Examples of push-pull type dyes useable in the context of the present invention.
**Figure 23****.** Examples of Bodipy dyes useable in the context of the present invention.
**Figure 24****.** Examples of dithiolene metal salt dyes useable in the context of the present invention.
**Figure 25****.** Examples of porphyrin dyes useable in the context of the present invention.
**Figure 26****.** Examples of copper complex dyes useable in the context of the present invention.
**Figure 27****.** Examples of phthalocyanine dyes useable in the context of the present invention.

**Scheme 1.** Comparison of the polymer surface (A) heated by conventional oven methods with (B) the new NIR laser diode photothermal approach according to the invention.
**Scheme 3.** Exemplary bonding of two polymerfilms containing a NIR heater in each film.

### DEFINITIONS

To facilitate an understanding of the present invention, a number of terms and phrases are defined below:
As used herein other than the claims, the terms "a," "an," "the," and/or "said" means one or more. As used herein in the claim(s), when used in conjunction with the words "comprise," "comprises" and/or "comprising," the words "a," "an," "the," and/or "said" may mean one or more than one. As used herein and in the claims, the terms "having," "has," "is," "have," "including," "includes," and/or "include" has the same meaning as "comprising," "comprises," and "comprise." As used herein and in the claims "another" may mean at least a second or more.
The phrase "a mixture thereof" and such like following a listing, the use of "and/or" as part of a listing, a listing in a table, the use of "etc" as part of a listing, the phrase "such as," and/or a listing within brackets with "e.g.," or i.e., refers to any combination (e.g., any sub-set) of a set of listed components, and combinations and/or mixtures of related species and/or embodiments described herein though not directly placed in such a listing are also contemplated. Such related and/or like genera(s), sub-genera(s), specie(s), and/or embodiment(s) described herein are contemplated both in the form of an individual component that may be claimed, as well as a mixture and/or a combination that may be described in the claims as "at least one selected from," "a mixture thereof" and/or "a combination thereof."
In general, the term "substituted" whether preceded by the term "optionally" or not, and substituents contained in formulae of this invention, refer to the replacement of hydrogen radicals in a given structure with the radical of a specified substituent. When more than one position in any given structure may be substituted with more than one substituent selected from a specified group, the substituent may be either the same or different at every position. As used herein, the term "substituted" is contemplated to include all permissible substituents of organic compounds.
The term "aliphatic", as used herein, includes both saturated and unsaturated, straight chain (i.e., unbranched) or branched aliphatic hydrocarbons, which are optionally substituted with one or more functional groups. As will be appreciated by one of ordinary skill in the art, "aliphatic" is intended herein to include, but is not limited to, alkyl, alkenyl, alkynyl moieties.
As used herein, the term "alkyl", refers to straight and branched alkyl groups. An analogous convention applies to other generic terms such as "alkenyl", "alkynyl" and the like. As used herein, "lower alkyl" is used to indicate those alkyl groups (substituted, unsubstituted, branched or unbranched) having about 1-6 carbon atoms. Illustrative alkyl groups include, but are not limited to, for example, methyl, ethyl, n-propyl, isopropyl, allyl, n-butyl, sec-butyl, isobutyl, tert-butyl, n-pentyl, sec-pentyl, isopentyl, tert-pentyl, n-hexyl, sec-hexyl, moieties and the like, which again, may bear one or more substituents. Alkenyl groups include, but are not limited to, for example, ethenyl, propenyl, butenyl, 1-methyl-2-buten-l-yl, and the like. Representative alkynyl groups include, but are not limited to, ethynyl, 2-propynyl (propargyl), 1-propynyl and the like.
The term "alicyclic", as used herein, refers to compounds which combine the properties of aliphatic and cyclic compounds and include but are not limited to cyclic, or polycyclic aliphatic hydrocarbons and bridged cycloalkyl compounds, which are optionally substituted with one or more functional groups. As will be appreciated by one of ordinary skill in the art, "alicyclic" is intended herein to include, but is not limited to, cycloalkyl, cycloalkenyl, and cycloalkynyl moieties, which are optionally substituted with one or more functional groups. Illustrative alicyclic groups thus include, but are not limited to, for example, cyclopropyl, -CH₂-cyclopropyl, cyclobutyl, -CH₂-cyclobutyl, cyclopentyl, -CH₂-cyclopentyl-n, cyclohexyl, -CH₂-cyclohexyl, cyclohexenylethyl, cyclohexanylethyl, norborbyl moieties and the like, which again, may bear one or more substituents.
The term "heteroaliphatic", as used herein, refers to aliphatic moieties in which one or more carbon atoms in the main chain have been substituted with a heteroatom. Thus, a heteroaliphatic group refers to an aliphatic chain which contains one or more oxygen, sulfur, nitrogen, phosphorus or silicon atoms, i.e., in place of carbon atoms. Heteroaliphatic moieties may be branched or linear unbranched. An analogous convention applies to other generic terms such as "heteroalkyl", "heteroalkenyl", "heteroalkynyl" and the like.
The term "heterocyclic" or "heterocycle", as used herein, refers to compounds which combine the properties of heteroaliphatic and cyclic compounds and include but are not limited to saturated and unsaturated mono- or polycyclic heterocycles such as morpholino, pyrrolidinyl, furanyl, thiofuranyl, pyrrolyl etc., which are optionally substituted with one or more functional groups, as defined herein. In certain embodiments, the term "heterocyclic" refers to a non-aromatic 5-, 6- or 7-membered ring or a polycyclic group, including, but not limited to a bi- or tri-cyclic group comprising fused six-membered rings having between one and three heteroatoms independently selected from oxygen, sulfur and nitrogen, wherein (i) each 5-membered ring has 0 to 2 double bonds and each 6-membered ring has 0 to 2 double bonds, (ii) the nitrogen and sulfur heteroatoms may optionally be oxidized, (iii) the nitrogen heteroatom may optionally be quaternized, and (iv) any of the above heterocyclic rings may be fused to an aryl or heteroaryl ring. Representative heterocycles include, but are not limited to, pyrrolidinyl, pyrazolinyl, pyrazolidinyl, imidazolinyl, imidazolidinyl, piperidinyl, piperazinyl, oxazolidinyl, isoxazolidinyl, morpholinyl, thiazolidinyl, isothiazolidinyl, and tetrahydrofuryl.
In general, the term "aromatic" or "aryl", as used herein, refers to stable substituted or unsubstituted unsaturated mono- or polycyclic hydrocarbon moieties having preferably 3-14 carbon atoms, comprising at least one ring satisfying Hückle's rule for aromaticity. Examples of aromatic moieties include, but are not limited to, phenyl, indanyl, indenyl, naphthyl, phenanthryl and anthracyl.
As used herein, the term "heteroaryl" refers to unsaturated mono-heterocyclic or polyheterocyclic moieties having preferably 3-14 carbon atoms and at least one ring atom selected from S, O and N, comprising at least one ring satisfying the Hückel rule for aromaticity. The term "heteroaryl" refers to a cyclic unsaturated radical having from about five to about ten ring atoms of which one ring atom is selected from S, O and N; zero, one or two ring atoms are additional heteroatoms independently selected from S, O and N; and the remaining ring atoms are carbon, the radical being joined to the rest of the molecule via any of the ring atoms, such as, for example, pyridyl, pyrazinyl, pyrimidinyl, pyrrolyl, pyrazolyl, imidazolyl, thiazolyl, oxazolyl, isooxazolyl, thiadiazolyl, oxadiazolyl, thiophenyl, furany1, quinolinyl, isoquinolinyl, and the like. Examples of heteroaryl moieties include, but are not limited to, pyridyl, quinolinyl, dihydroquinolinyl, isoquinolinyl, quinazolinyl, dihydroquinazolyl, and tetrahydroquinazolyl.
As used herein, the expression "Cₓ-C_{y}, preferably Cₓ₁-C_{y1}, alkylaryl, aralkyl or aryl", where x, y, x1 and y1 represent integers denoting the number of carbon atoms in the chemical moiety to which it refers (e.g., "alkylaryl", "aralkyl", "aryl")), means "Cₓ-C_{y}alkylaryl, Cₓ-C_{y}aralkyl or Cₓ-C_{y}aryl, preferably Cₓ₁-C_{y1}alkylaryl, Cₓ₁-C_{y1} aralkyl or Cₓ₁-C_{y1}aryl". Likewise, the expression "Cₓ-C_{y} alkylaryl, aralkyl or aryl", means "Cₓ-C_{y}alkylaryl, Cₓ-C_{y}aralkyl or Cₓ-C_{y}aryl".
The term "halogen" as used herein refers to an atom selected from fluorine, chlorine, bromine and iodine.
The term "amine" refers to a group having the structure -N(R)₂ wherein each occurrence of R is independently hydrogen, or an aliphatic, heteroaliphatic, aryl or heteroaryl moiety, or the R groups, taken together with the nitrogen atom to which they are attached, may form a heterocyclic moiety.
As used herein, the term "independently" refers to the fact that the substituents, atoms or moieties to which these terms refer, are selected from the list of variables independently from each other (i.e., they may be identical or the same).
As used herein, the term "mild light irradiation conditions" or "mild irradiation conditions" refers to irradiation conditions in the near infrared region e.g., λ=625-2500nm, for example under near infrared light range λ=700-2500 nm, in particular in the near infrared light range λ=700-1500 nm. The light irradiation may be low, moderate or high, depending on the level of exotherm to be achieved. The light irradiation may be with low intensity of a few W/cm² or even in the mW/cm² range. For example the near infrared irradiation intensity may range from 50 mW/cm² to 10 W/cm², advantageously from 100 mW/cm² to 7 W/cm², more advantageously from 200 mW/cm² to 5 W/cm², still more advantageously from 300 mW/cm² to 3 W/cm². The light irradiation may be moderate to high (for example, the intensity may be as low as 25 mW/cm² or even lower (for example 25 mW/cm² ≤ l ≤ 100 W/cm², for example 25 mW/cm² ≤ l ≤ 20 W/cm²), or with higher intensity, for example to increase the exotherm generated by the red-to-NIR organic dye, depending on the intended application.
As used herein, the term "photothermal" refers to the ability of red-NIR organic dyes used in the present invention to behave as heat-generator under the triggering action of red to near-infrared irradiation, as further described herein.
As used herein, "about" refers to any inherent measurement error or a rounding of digits for a value (e.g., a measured value, calculated value such as a ratio), and thus the term "about" may be used with any value and/or range. As used herein, the term "about" can refer to a variation of ±5% of the value specified. For example, "about 50" percent can in some embodiments carry a variation from 45 to 55 percent. For integer ranges, the term "about" can include one or two integers greater than and/or less than a recited integer. Unless indicated otherwise herein, the term "about" is intended to include values, e.g., weight %, temperatures, proximate to the recited range that are equivalent in terms of the functionality of the relevant individual ingredient, the composition, or the embodiment.
As used herein, the term "and/or" means any one of the items, any combination of the items, or all of the items with which this term is associated.

As will be understood by the skilled artisan, all numbers, including those expressing quantities of ingredients, properties such as molecular weight, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.

As will be understood by one skilled in the art, for any and all purposes, particularly in terms of providing a written description, all ranges recited herein also encompass any and all possible subranges and combinations of subranges thereof, as well as the individual values making up the range, particularly integer values. A recited range (e.g., weight percents or carbon groups) includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.

As will also be understood by one skilled in the art, all language such as "up to," "at least," "greater than," "less than," "more than," "or more," and the like, include the number recited and such terms refer to ranges that can be subsequently broken down into subranges as discussed above. In the same manner, all ratios recited herein also include all subratios falling within the broader ratio. Accordingly, specific values recited for radicals, substituents, and ranges, are for illustration only; they do not exclude other defined values or other values within defined ranges for radicals and substituents.

One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.

As will be understood by one skilled in the art, for any and all purposes, particularly in terms of providing a written description, the expression "≤ x %" (for example when used to express % w/w contents in components) is equivalent to "x % or <x %". As such, the expression "≤ x %" is understood to provide support for the values "x %" and "<x %", independently. Likewise for the expression "≥ x %": it will be understood to provide support for the values "x %" and "> x %", independently.

### DETAILED DESCRIPTION OF CERTAIN PREFERRED EMBODIMENTS OF THE INVENTION

As noted above, there is a dire need for the development of new systems and methods for more efficient recycling/reprocessing and self-healing of polymer compositions, without the known disadvantages of existing methods.

The inventors have discovered that an appropriately selected Red-to-NIR organic dye system can overcome the aforementioned drawbacks in the field.

In this context, there is provided herein a process for bringing a polymer composition above a threshold temperature on demand, by including in the polymer composition at least one heat-generating organic dye that generates heat above the threshold temperature when exposed to a given range of red to near-infrared irradiation.

For example, the polymer composition may comprise 0,01 to 0,5% weight of at least one heat-generating organic dye that generates heat above the threshold temperature when exposed to a given range of red to near-infrared irradiation, the weight % being expressed with respect to the total weight of the polymer composition.

The process may comprise exposing the polymer composition to red to near-infrared irradiation at a wavelength within the red to near-infrared range where the heat-generating organic dye generates heat above the threshold temperature.

As such, in one aspect, the present invention provides a process for bringing a polymer composition above a threshold temperature on demand, wherein:
a) the polymer composition comprises 0,01 to 0,5% weight of at least one heat-generating organic dye that generates heat above the threshold temperature when exposed to a given range of red to near-infrared irradiation, and
b) the process comprises exposing the polymer composition to red to near-infrared irradiation at a wavelength within the red to near-infrared range where the heat-generating organic dye generates heat above the threshold temperature, the weight % being expressed with respect to the total weight of the polymer composition.

Upon absorption of red-to-NIR light irradiation, the organic dye useful in the context of the invention converts a red-to-NIR light into heat (called hereafter "heater" or "heat-generator"). The organic dye therefore generates an exotherm upon exposure to red-to-NIR light irradiation in an appropriately chosen wavelength range. This exotherm may be used for inducing physico-chemical modification of a polymer (softening, melting, depolymerization, decomposition), depending on the temperature of the exotherm.

The threshold temperature may be the glass transition temperature of the polymer composition, the depolymerization temperature of the polymer composition, the melting temperature of the polymer composition, or the decomposition temperature of the polymer composition.

Methods for determining polymer's glass transition temperature, depolymerization temperature, melting temperature, or decomposition temperature are well known in the art. Any conventional method for determining a polymer's glass transition temperature, depolymerization temperature, melting temperature, or decomposition temperature, may be used to determine the threshold temperature to be reached for any given polymer composition. For example, glass transition temperature may be determined by Differential Scanning Calorimetry (DSC), and Thermogravimetric analysis (TGA) may be used to measure the decomposition temperature.

### A. Threshold temperature = glass transition temperature

For example, the threshold temperature may be the glass transition temperature of the polymer composition. This variant may find use for inducing physical modification of thermoplastic polymer compositions.

For example, when the polymer composition comprises a thermoplastic polymer, and the threshold temperature is the glass transition temperature of the polymer composition, the process according to the invention may be:
- for reshaping a thermoplastic polymer article
- for bonding together two articles made of thermoplastic polymer or an elastomer
- for separating two pieces of a thermoplastic polymer or elastomer article
- for repairing at least one defect in a thermoplastic polymer article
- for recycling a composite thermoplastic polymer composition.

As such, in one aspect, the polymer composition may comprise a thermoplastic polymer, the threshold temperature may be the glass transition temperature of the polymer composition and the process may be for reshaping a thermoplastic polymer article on demand under the triggering action of red to near-infrared irradiation; the process comprising:
a) exposing the region of the article to be reshaped to red to near-infrared irradiation at a wavelength within the red to near-infrared range where the heat-generating organic dye generates heat above, for example at least 10°C above, the glass transition temperature of the thermoplastic polymer composition; thereby softening the region of the article that is subjected to red to near-infrared irradiation;
b) reshaping the region of the polymer article exposed to red to near-infraed irradiation, to give the polymer article the new desired shape; optionally under continuous exposure to the red to near-infrared irradiation allowing the heat-generating organic dye to generate heat above, for example at least 10°C above, the glass transition temperature of the thermoplastic polymer;
c) stopping the red to near-infrared irradiation; and
d) letting cool to a temperature below the glass transition temperature of the thermoplastic polymer, such as room temperature, thereby allowing the thermoplastic polymer article to set into the new shape.

In another aspect, the polymer composition may comprise a thermoplastic polymer or an elastomer, the threshold temperature may the glass transition temperature of the polymer composition and the process may be for bonding together two articles made of thermoplastic polymer or an elastomer; under the triggering action of red to near-infrared irradiation; the process comprising:
a) providing two articles made of a thermoplastic polymer or an elastomer, the thermoplastic polymer or elastomer comprising at least one heat-generating organic dye that generates heat above, for example at least 10°C above, the glass transition temperature of the thermoplastic polymer or elastomer when exposed to a given range of red to near-infrared irradiation;
b) contacting a surface of each thermoplastic polymer or elastomer article together;
c) exposing the region of contact between the surfaces of the thermoplastic polymer or elastomer article, to red to near-infrared irradiation at a wavelength within the red to near-infrared range where the heat-generating organic dye generates heat above, for example at least 10°C above, the glass transition temperature of the thermoplastic polymer or elastomer, thereby softening the polymer matrix in the region of surface contact exposed to red to near-infrared irradiation and allowing the contact region between the two polymer articles to seal;
d) stopping the red to near-infrared irradiation; and
e) letting cool to a temperature below the glass transition temperature of the thermoplastic polymer or elastomer, such as room temperature, thereby allowing the surfaces of two thermoplastic polymer or elastomer articles to be solidly bound together.

In a further aspect, the polymer composition may comprise a thermoplastic polymer or an elastomer, the threshold temperature may be the glass transition temperature of the polymer or elastomer composition and the process may be for separating two pieces of a thermoplastic polymer or elastomer article under the triggering action of red to near-infrared irradiation, the process comprising:
a) providing an article made of thermoplastic polymer or an elastomer, constituted with two pieces of thermoplastic polymer or elastomer sealed together by a process for bonding together two articles made of thermoplastic polymer or an elastomer, as described above;
b) exposing the sealed region between the two pieces of thermoplastic polymer or elastomer to red to near-infrared irradiation at a wavelength within the red to near-infrared range where the heat-generating organic dye generates heat above, for example at least 10°C above, the glass transition temperature of the thermoplastic polymer, thereby softening the polymer or elastomer matrix in the region of thermoplastic polymer or elastomer exposed to the red to near-infrared irradiation;
c) pulling apart the two pieces of thermoplastic polymer to separation.

In yet another aspect, the polymer composition may comprise a thermoplastic polymer, the threshold temperature may be the glass transition temperature of the polymer composition and the process may be for repairing at least one defect in a thermoplastic polymer article, wherein the polymer composition comprises at least one heat-generating organic dye that generates heat above, for example at least 10°C above, the glass transition temperature of the thermoplastic polymer when exposed to a given range of red to near-infrared irradiation; the process comprising exposing the region of the article containing the at least one defect to red to near-infrared irradiation at a wavelength within the red to near-infrared range where the heat-generating organic dye generates heat above, for example at least 10°C above, the glass transition temperature of the thermoplastic polymer; thereby resulting in self-healing of the defect.

For example, the at least one defect may include a crack, creep, a void, a hole, a distortion, a deformation, or a scratch.

### B. Threshold temperature = glass transition or melting temperature

In still another aspect, the polymer composition may be a composite polymer composition comprising a thermoplastic polymer and reinforcements or fillers. By bringing the polymer composition above its glass transition temperature or melting temperature, the polymer matrix will fluidify/liquefy and it becomes possible to separate the fluid/melted polymer matrix from the reinforcements/fillers, for example by sieving the composite fluid/melted polymer composition through a suitably meshed sieve (i.e. mesh size adapted to the reinforcement/filler size). Thus, in yet a further aspect, the polymer composition may be a composite polymer composition comprising a thermoplastic polymer and reinforcements or fillers, the threshold temperature may be the glass transition temperature or the melting temperature of the polymer composition and the process may be for recycling a composite thermoplastic polymer composition, on demand under the triggering action of red to near-infrared irradiation; the process comprising:
a) exposing the composite polymer composition to red to near-infrared irradiation at a wavelength within the red to near-infrared range where the heat-generating organic dye generates heat above, for example at least 10°C above, the glass transition temperature or the melting temperature of the polymer composition, thereby leading to fluidization of the polymer composition; and
b) separating the thermoplastic polymer and reinforcements or fillers from the fluid polymer composition produced in step a).

### C. Threshold temperature = depolymerization temperature

In another variant, the threshold temperature may be the depolymerization temperature of the polymer composition. This variant may find use for recycling polymer compositions.

For example, when the threshold temperature is the depolymerization temperature of the polymer composition, the process according to the invention may be for recycling a polymer composition on demand under the triggering action of red to near-infrared irradiation; the process comprising:
a) exposing the polymer composition to red to near-infrared irradiation at a wavelength within the red to near-infrared range where the heat-generating organic dye generates heat above, for example at least 10°C above, the depolymerization temperature of the polymer composition, thereby leading to depolymerization of the polymer composition into monomers; and
b) collecting the monomers produced in step a).

In step a), the heat-generating organic dye may be made to generate heat for example at least 20-30°C above the depolymerization temperature of the polymer layer.

### D. Threshold temperature = decomposition temperature

In another variant, the threshold temperature may be the decomposition temperature of the polymer composition. This variant may find use for example for separating two articles bonded by a polymer layer.

For example, when the threshold temperature is the decomposition temperature of the polymer composition, the process according to the invention may be for separating two articles bonded by a polymer layer on demand under the triggering action of red to near-infrared irradiation; the process comprising:
a) providing two articles bonded together with a polymer layer;
b) exposing the bonding region between the two articles to red to near-infrared irradiation at a wavelength within the red to near-infrared range where the heat-generating organic dye generates heat above, for example at least 10°C above, the decomposition temperature of the polymer layer, thereby decomposing the polymer matrix in the bonding region between the two articles;
c) pulling apart the two articles to separation.

In step b), the heat-generating organic dye may be made to generate heat for example at least 20-30°C above the decomposition temperature of the polymer layer.

### Polymer composition

Generally speaking, the polymer may be a thermoplastic or thermosetting polymer or an elastomer. In exemplary embodiments, the polymer may be a thermoplastic or thermosetting polymer.

Examples of thermoplastic polymers suitable for carrying out the present invention include polyacrylates, polymethacrylates such as poly(methyl methacrylate), polyacrylonitrile butadiene styrene terppolymer, nylon, polylactic acid, polybenzimidazole, polycarbonate, polyestersulfone, polyoxymethylene, polyetherether ketone, polyetherimide, polyethylene, polyphenylene oxide, polyphenylene sulfide, polypropylene, polystyrene, polyvinyl chloride, polyvinylidene fluoride, or teflon.

Examples of thermosetting polymers suitable for carrying out the present invention include epoxy resins, polyureas, phenolic resins, polyester resins, polyurethanes, polyimides, polycyanurates, or vinyl ester resins.

As previously discussed, the polymer composition may be a composite polymer composition. As such, the polymer composition may comprise composite reinforcements or fillers. The composite reinforcements or fillers may be glass fibers, carbon fibers such as carbon fiber fabrics, aramid fibers, basalt fibers, silica fibers, metallic fillers such as metallic nanoparticles, polymer fibers, natural fibers or carbon-based fillers such as carbon black, biochar, carbon fibers, carbon fiber fabrics or carbon nanostructures (such as carbon nanotubes or graphene), or a mixture of two or more of those.

### Heat-generating organic dye

Advantageously, the heat-generating organic dye may be any suitable dye that generates heat when exposed to a 625-2500 nm light source (i.e., when exposed to irradiation in the red to near-infrared), for example when exposed to a 625-1500 nm light irradiation. Advantageously, the heat-generating organic dye, when exposed to red to near-infrared irradiation, may generate an exotherm above a threshold temperature which is useful to induce physico-chemical modification of a polymer composition which contains the heat-generating organic dye. The threshold temperature may be the glass transition temperature, the depolymerization temperature, the melting temperature, or the decomposition temperature of the polymer composition. Therefore the exotherm generated by the organic dye upon exposure to red-to-NIR light irradiation in an appropriately chosen wavelength range, may induce softening/fluidization, melting, depolymerization, or decomposition of the polymer matrix of the polymer composition containing the heat-generating organic dye. As the reader will appreciate, the choice of the heat-generating organic dye can be made depending on the application that is targeted/desired, and the temperature that is desired to be achieved. This, together with the fact that low intensity red-NIR irradiation makes it possible to very finely control the temperature, provides to the system according to the present invention a great versatility in terms of fine-tuning the temperature, and the polymerization process, which is a notable advantage over existing systems.

Advantageously, the heat-generating organic dye may comprise a cyclic or acyclic conjugated system containing 1, 2 or 4 heteroatoms selected from N or S, for example 2 or 4 heteroatoms selected from N or S, the lone pair of which may participate in the conjugated system; wherein the heat-generating organic dye generates heat when exposed to a 625-2500 nm light source, for example when exposed to a 625-1500 nm light irradiation. Advantageously, the heat-generating organic dye may comprise:
- an opened conjugated system containing two N or S atoms, preferably two N atoms, the lone pairs of which may participate in the conjugated system;
- a conjugated macrocyclic system containing four N or S atoms, preferably four N atoms, complexed to a single metal atom; preferably a metal atom that absorbs in the red to near-infrared region of 625-2500 nm, for example a metal atom that absorbs in the range 625-1500 nm;
- a metal complex comprising two bidentate conjugated ligands; each bidentate ligand containing two N or S atoms, preferably two S atoms, complexed to a single metal atom; preferably a metal atom that absorbs in the red to near-infrared region of 625-2500 nm, for example a metal atom that absorbs in the range 625-1500 nm.

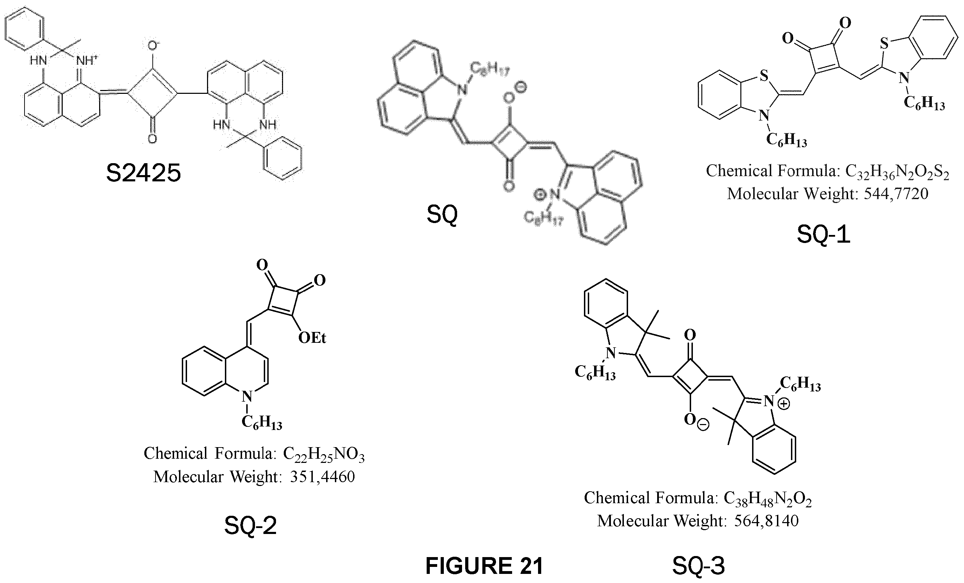

An example of heat-generating organic dye comprising a cyclic or acyclic conjugated system containing one heteroatom selected from N or S, the lone pair of which may participate in the conjugated system include the squaraine dye SQ-2 shown in Figure 21.

Advantageously, the at least one heat-generating organic dye may be selected from:
(i) cyanine dyes;
(ii) squaraine and squarylium dyes;
(iii) push-pull compounds;
(iv) BODIPY and pyrromethene dyes;
(v) Dithiolene metal salt dyes;
(vi) Porphyrin dyes;
(vii) Copper complex dyes;
(viii) Phthalocyanine dyes;
or a mixture of one or more of the above.

The dyes may be tested for their ability to generate heat upon red-NIR irradiation by thermal imaging. For this characterization, an appropriate concentration of red-NIR dye may incorporated in the polymerizable resin or in the ready-to-use polymer composition and irradiated with the red-NIR light. Through thermal imaging experiments, the temperature of the resin can be recorded for different irradiation times. Thermal camera, thermocouple or pyrometer can also be used to record the temperature. Without the presence of the red-NIR-dye the temperature remains almost unchanged showing the role of the red-NIR dye as heater.

As used herein, the term "cyanine dye" does not deviate from the conventional meaning of the term in the art, and refers to a dye having an opened conjugated system where a moiety 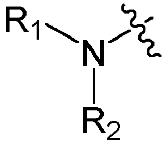 and a moiety 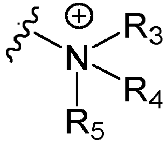 are covalently linked via a conjugated system of two or more double bonds, some of which may belong to an aromatic radical. A counter-ion X⁻ is typically present to counterbalance the positive charge of the ammonium ion. Advantageously, X⁻ may represent Cl⁻, I⁻, ClO₄⁻, p-toluenesulfonate, p-dodecylbenzenesulfonate, or a borate anion, such as triphenylbutylborate. Advantageously, the counter ion X⁻ may represent a borate anion. For example, X⁻ may represent triphenylbutylborate.

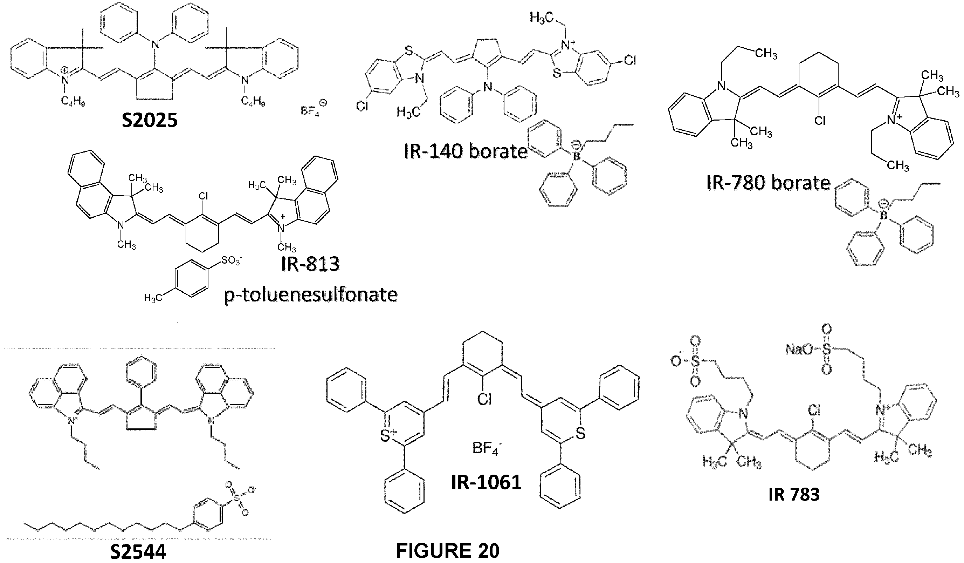

The expression "opened conjugated system" refers to the fact that the moieties 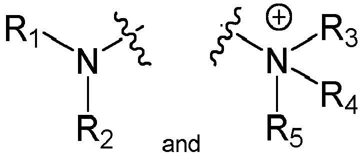 do not form a cycle together with the conjugated double bonds (i.e, the whole does not piggy-back together to form a cycle). However, the whole system may comprise one or more mono- or polycyclic alicyclic, heterocyclic, aromatic or heteroaromatic radicals. For example, cyanine dyes useable in the context of the invention include as synthetic dyes with the general formula R₂N[CH=CH]*ₙ*CH=N⁺R₂ or R₂N⁺=CH[CH=CH]*ₙ*NR₂ (n is a small number, typically 2-5) in which the nitrogen and part of the conjugated chain usually form part of a heterocyclic system, such as imidazole, pyridine, pyrrole, quinoline and thiazole, e.g. **[1]** Examples of such cyanine dyes useable as heat-generator according to the present invention include those depicted in Figure 20.

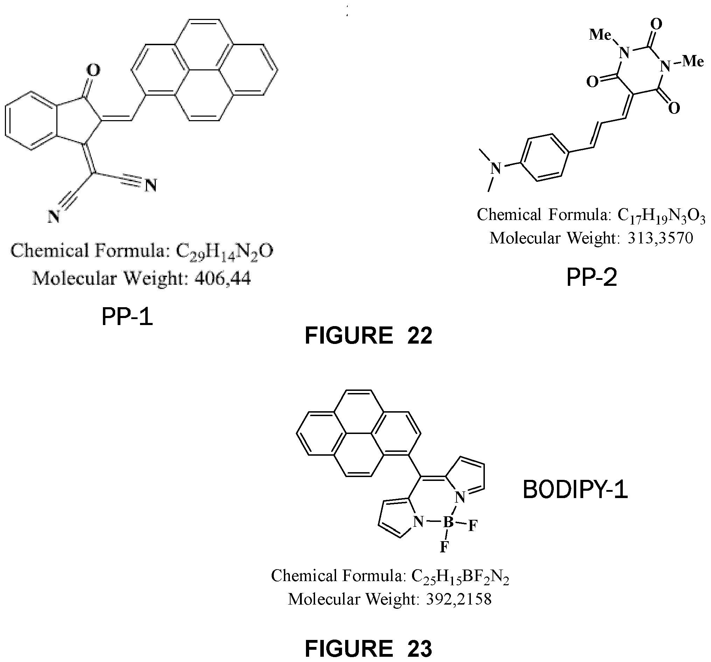

As used herein, the term "squaraine dye" does not deviate from the conventional meaning of the term in the art, and refers to a family of chromophores containing structures such as cyanine dyes, two donor groups conjugated to an electron deficient oxocyclobutenolate core, leading to a highly electron delocalized structure that can be exemplified as zwitterions. Generally, squaraine dyes with donor-acceptor-donor (D-A-D) structures are synthesized by the condensation reaction of 3,4-dihydroxy-3-cyclobutene-1,2- dione (squaric acid) with activated aromatic or heterocyclic components **[2]** Examples of such squaraine dyes useable as heat-generator according to the present invention include those depicted in Figure 21. As used herein, the term "push-pull dye" does not deviate from the conventional meaning of the term in the art, and refers to organic pi-systems end -capped with an electron donor (D) and an electron acceptor (A) at each side of the pi-system. Interaction between A and D allows intramolecular charge-transfer (ICT) and a new low-energy molecular orbital is formed. Thus, it is easier to achieve excitation of electrons in the molecular orbital at longer wavelength. Typical electron donors D are represented by the substituents with +M/+I effects such as OH, NH₂, OR and NR₂, heterocyclic moieties... On the other hand, the most used electron acceptors A involve substituents featuring M/I effects such as NO₂, CN, CHO, electron deficient heterocyclic compounds... **[3].** Examples of such push-pull dyes useable as heat-generator according to the present invention include that depicted in Figure 22.

As used herein, the term "BODIPY" does not deviate from the conventional meaning of the term in the art, and refers to boron-dipyrromethene type compounds, which is a class of fluorescent dyes. It is composed of dipyrromethene complexed with a disubstituted boron atom, typically a BF2 unit.**[4]** An example of such BOPIDY dyes useable as heat-generator according to the present invention include that depicted in Figure 23.

As used herein, the term "dithiolene dye" does not deviate from the conventional meaning of the term in the art, and refers to metal complexes including unsaturated bidentate ligands containing two sulfur donor atoms (e.g., dithiolene ligands attached to a central metal). They may be also referred to as "metallodithiolene dyes". Generally, the metal used is nickel, palladium or platinum and is in a zerovalent state. Dithiolene ligands are unsaturated bidentate ligand wherein the two donor atoms are sulfur. This formed square planar complexes. Because of the extensive electron delocalization about the dithiolene ring system and the interaction of this delocalized system's available d-orbitals on the central metal, strong NIR absorption is observed with these compounds. **[5]**

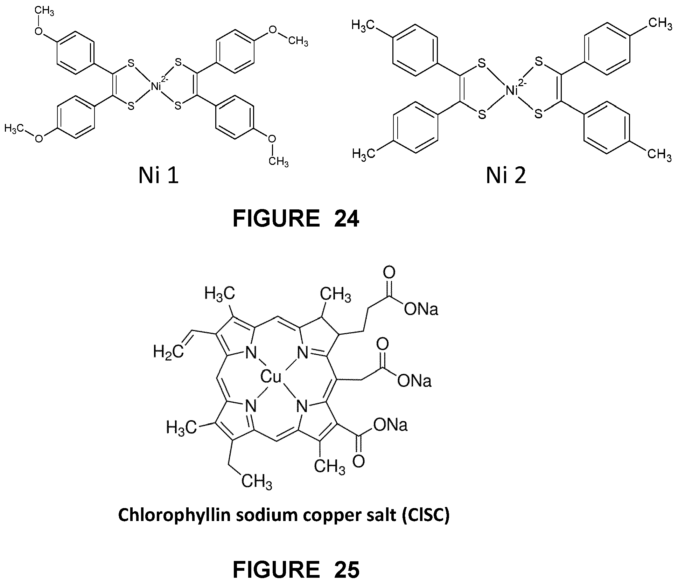

Advantageously, a dithiolene dye useable as heat-generator according to the present invention include: 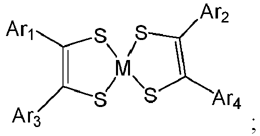 wherein M represents a metal center that absorbs in the red to near-infrared region of 625-2500 nm, for example a metal atom that absorbs in the range 625-1500 nm, such as Ni; and Ar₁, Ar₂, Ar₃, and Ar₄ independently represent a C₆₋₁₀ aryl; wherein each aryl moiety may be, individually, further substituted with one or more substituents, such as -OH, -OR, halogen atom, -NO₂, -CN, -NR^{A}₁R^{A}₂, - NHC(=O)R^{A}₃, -OC(=O)R^{A}₃, vinyl, or linear or branched C₁₋₁₀ alkyl or C₆₋₁₀ aryl moieties; wherein R and R^{A}₃ independently represent a linear or branched C₁₋₁₀ alkyl or C₆₋₁₀ aryl moiety; and R^{A}₁ and R^{A}₂ independently represent H or linear or branched C₁₋₆ alkyl or C₆₋₁₀ aryl moieties, where R^{A}₁ and R^{A}₂, taken together with the nitrogen atom to which they are attached, may form a 5- or 6-membered heterocyclic moiety; wherein each of the foregoing aryl moieties may be, individually, further substituted with one or more linear or branched C₁₋₆ alkyl or C₆₋₁₀ aryl moieties. Advantageously, Ar₁, Ar₂, Ar₃, and Ar₄ may independently represent a phenyl moiety; wherein each phenyl moiety may be, individually, further substituted with one or more substituents, such as those as described immediately above, preferably linear or branched C₁₋₆ alkyl moieties, including methyl, propyl, butyl, *i*-propyl. Examples of such dithiolene dyes useable as heat-generator according to the present invention include those depicted in Figure 24.

As used herein, the term "porphyrin dye" does not deviate from the conventional meaning of the term in the art, and refers to conjugated heterocyclic macrocycle metal complexes comprising four modified pyrrole subunits interconnected at their α carbon atoms via methine bridges (=CH-).

Advantageously, a porphyrin dye useable as heat-generator according to the present invention may have a heterocyclic conjugated system having the structure: 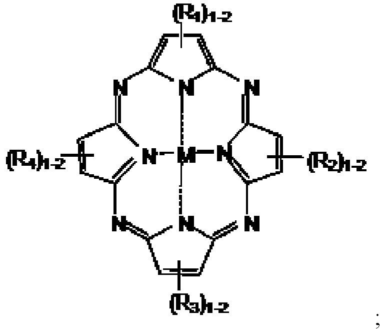 wherein M represents a metal center that absorbs in the red to near-infrared region of 625-2500 nm, for example a metal atom that absorbs in the range 625-1500 nm, such as Mg or Cu; and each occurrence of R₁, R₂, R₃, and R₄ may independently represent H, -C(=O)OR₅, vinyl, a linear or branched C₁₋₁₀ alkyl or a C₆₋₁₀ aryl moiety; wherein R₅, for each occurrence, may independently represent H or an alkali metal cation such as Na⁺; and wherein each of the foregoing alkyl or aryl moieties may be, individually, further substituted with one or more linear or branched C₁₋₆ alkyl or C₆₋₁₀ aryl moieties. Examples of such porphyrin dyes useable as heat-generator according to the present invention include chlorophyllin sodium copper salt depicted in Figure 25.

As used herein, the term "copper complex dye" does not deviate from the conventional meaning of the term in the art, and refers to conjugated oxygen-containing systems (acetylacetonate derivatives) comprising either one of the following basic motifs: 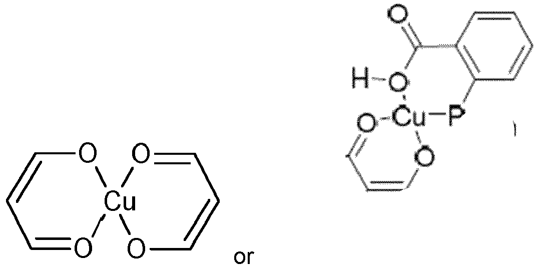 each of which may bear one or more alkyl and/or aryl substituents.

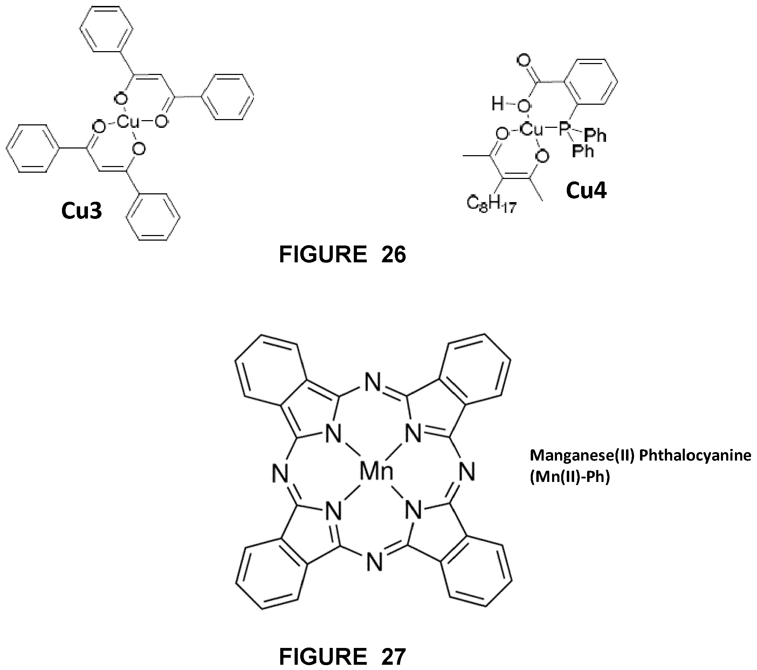

Examples of such copper complex dyes useable as heat-generator according to the present invention include those depicted in Figure 26.

As used herein, the term "phthalocyanine dye" does not deviate from the conventional meaning of the term in the art, and refers to conjugated macrocycles which, depending on how they were synthesized, contain different metal or metalloid inclusions. Advantageously, a phthalocyanine dye useable as heat-generator may have a cyclic conjugated system having the structure: 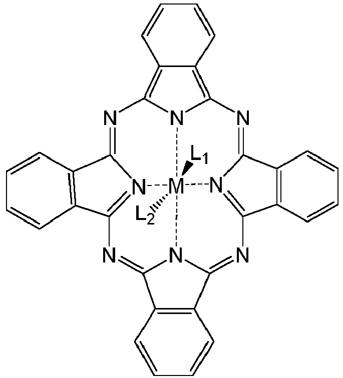 wherein M represents a metal center, for example Mn, and L₁ and L₂ independently represent acyloyl ligands or may be absent, depending on the metal atom valency. Examples of such phthalocyanine dyes useable as heat-generator include Manganese (II) phthalocyanine depicted on Figure 27.

Preferably the at least one heat-generating organic dye may be selected from any one or more of the dyes depicted on Figures 20-27 and/or in the Examples of this document, most preferably cyanine dyes such as those depicted in Figure 20 or squaraine dyes such as those depicted in Figure 21.

Advantageously, the at least one heat-generating organic dye may be a cyanine dye, squaraine or squarylium dye, a push-pull dye, a BODIPY or pyrromethene dye, a porphyrin dye, a copper complex dye, or a phthalocyanine dye, in the form of a borate salt; preferably a cyanine dye in the form of a borate salt, more preferably: 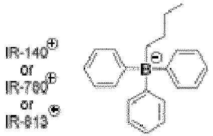 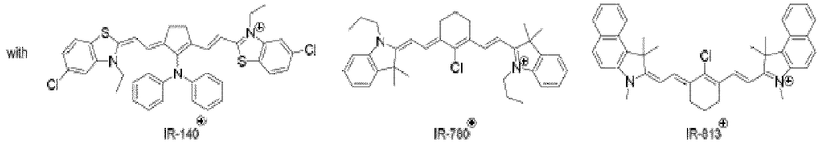 most preferably IR-780 borate.

The dye performance as heat generator may vary with the irradiation wavelength and/or intensity. As such, both parameters (irradiation wavelength and/or intensity) may therefore be used to tune the dye performance for producing a sufficient exotherm.

Advantageously, the heat-generating organic dye may be used in about 0.001% w/w to < 0.5 % w/w, preferably 0.001-0.4 % w/w, preferably 0.001-0.3 % w/w, more preferably ≤ 0.25 % w/w, still more preferably ≤ 0.20 % w/w, most preferably ≤ 0.15 % w/w, most preferably ≤ 0.10 % w/w, yet most preferably about 0.1 % w/w or even < 0.1 % w/w, based on the total weight of the polymer composition. For example the heat-generating organic dye may be used in about 0.005% w/w, 0.007% w/w, 0.009% w/w, 0.01% w/w, 0.02% w/w, 0.03% w/w, 0.04% w/w, 0.05% w/w, 0.06% w/w, 0.07% w/w, 0.08% w/w, 0.09% w/w, 0.10% w/w, 0.11% w/w, 0.12% w/w, 0.13% w/w, 0.14% w/w, 0.15% w/w, 0.16% w/w, 0.17% w/w, 0.18% w/w, 0.19% w/w, 0.20% w/w, 0.25% w/w, 0.30% w/w, 0.35% w/w, 0.40% w/w, 0.45% w/w, 0.50% w/w, based on the total weight of the polymer composition. Advantageously, the heat-generating organic dye may be used in about < 0.50 % w/w, preferably ≤ 0.40 % w/w, preferably ≤ 0.30 % w/w, preferably ≤ 0.20 % w/w, preferably ≤ 0.15 % w/w, preferably ≤ 0.10 % w/w, most preferably ≤ 0.08 % w/w of the total weight of the polymer composition.

Advantageously, the heat-generating organic dye may be used in about 0.01-0.50 wt%, more preferably from 0.01-0.30 wt%, yet more preferably from 0.01-0.20 wt%, even more preferably from 0.01-0.10 wt%, most preferably from 0.05-0.10 wt%, based on the total weight of the polymer composition.

Advantageously, the heat-generating organic dye may be selected from cyanine dyes, squaraine or squarylium dyes, push-pull dyes, BODIPY or pyrromethene dyes, porphyrin dyes, copper complex dyes, or phthalocyanine dyes, adsorbing in the red to near-infrared region; preferably cyanine dyes or squaraine dyes.

Advantageously, the heat-generating organic dye may be selected from any one or more of the following:

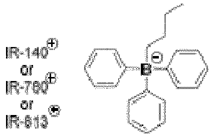

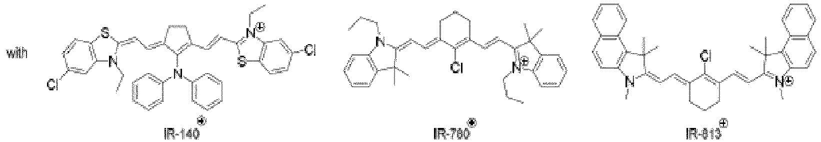

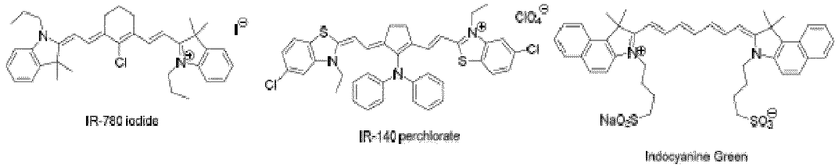

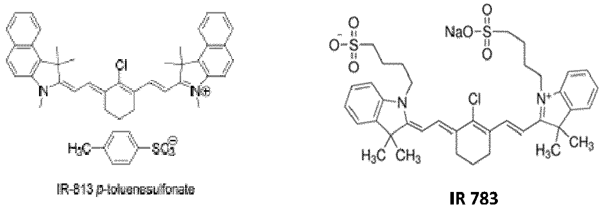

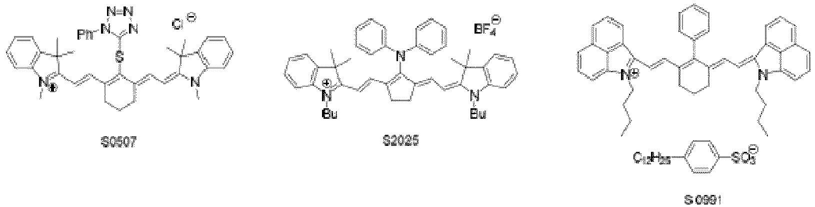

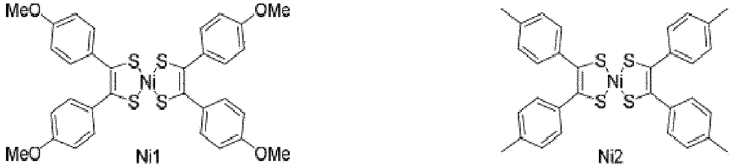

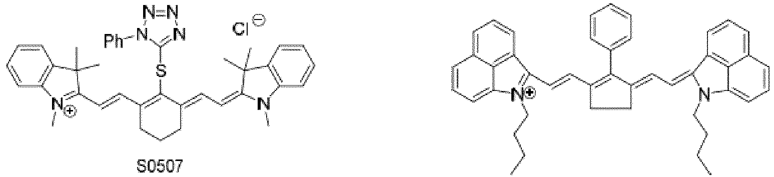

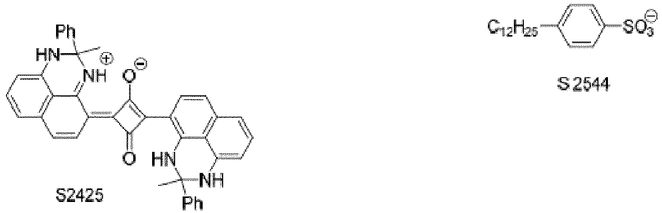

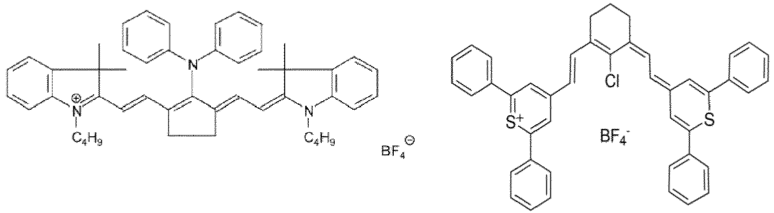

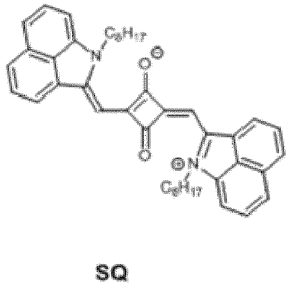

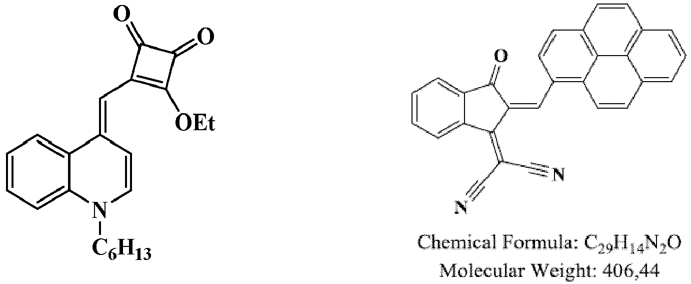

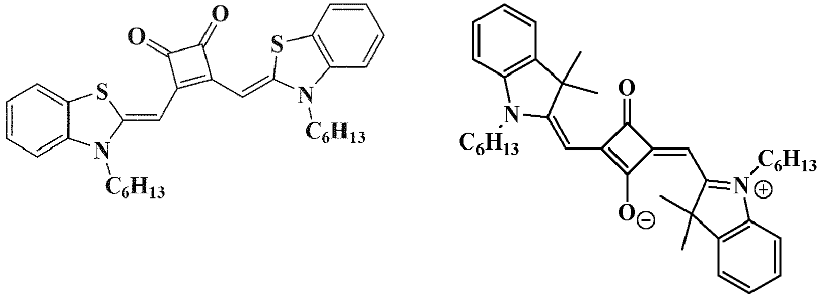

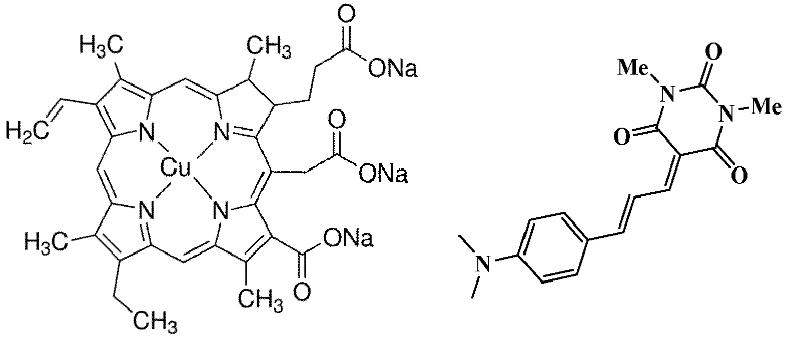

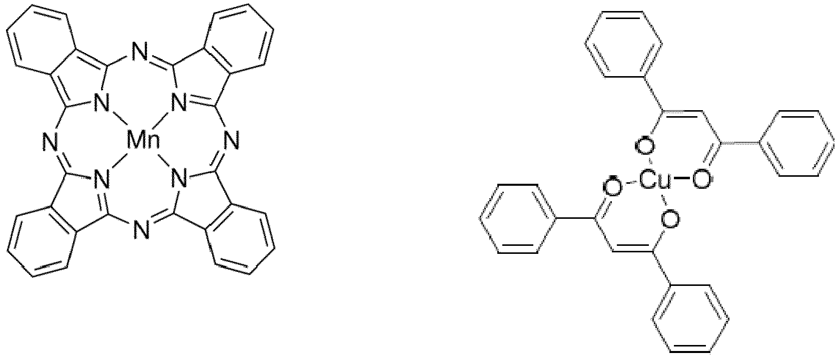

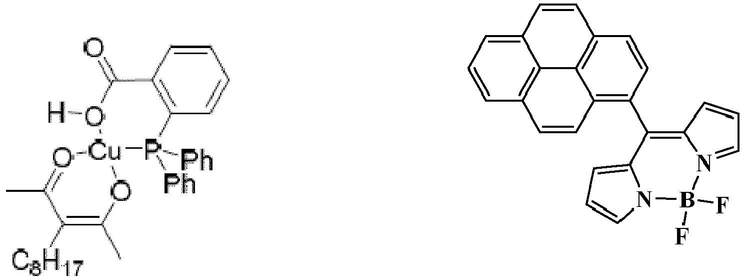

Advantageously, the heat-generating organic dye may be selected from

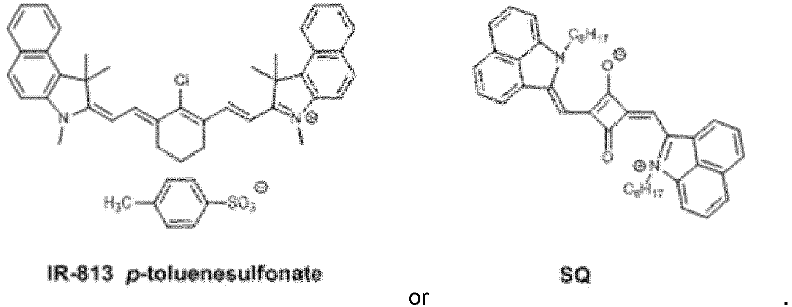

### Irradiation light source

For purposes of the present invention, any light source known in the art, capable of generating light in the 625-2500 nm region, for example in the range of 625-1500 nm, may be used. For example, light emitted from LED bulbs, laser, laser diode, low pressure mercury and argon lamps, fluorescent light systems, electric arc-light sources, high intensity light sources may be used. Advantageously, the light source may generate light in the red region of the light spectrum (i.e., 625-750 nm). For example, light sources that may be used to that effect include LED bulb, laser, laser diode, fluorescent light system, electric arc light source, high intensity (metal halide 3000K, high pressure sodium lamp), Xenon light, Mercury-Xenon light. Advantageously, the light source may generate light in the near-infrared region of the light spectrum (i.e., 700-2500 nm, for example 700-1500 nm). For example, light sources that may be used to that effect include NIR LEDs, NIR lasers, low pressure mercury and argon lamps (696-1704 nm) Tungsten light source, tungsten halogen light source, Nd:Yag laser, Nd:YVO₄, Nd:CidVO₄, Nd:LuVO₄, CO₂ laser, the intensity of which (especially for the most powerful irradiation light source systems such as lasers (e.g., Nd:Yag lasers)) may be tuned down to a fairly low intensity (e.g., <10 W/cm²).

An important advantage of the invention is that bringing a polymer composition above a desired temperature threshold can be achieved under long wavelength irradiation conditions (i.e., less energetic and safer than UV-type irradiation for example).

Another important advantage include the potentiality of having a tunable heat released: by changing (i) the nature/type of heat-generating organic dye, (ii) its concentration, (iii) the power of the light delivered (irradiance), and/or (iv) the irradiation wavelength, the temperature of the system (and ultimately the control of the physico-chemical modification induced in the polymer matrix) can readily be modulated. This is a stark advantage over existing processes.

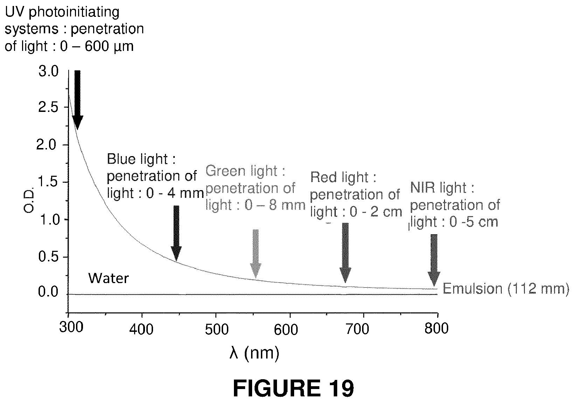

Yet another advantage is that red-to-near-infrared irradiation penetrates much deeper within samples, than other commonly used irradiations. Cf. Figure 19. The present invention therefore provides much better control of the temperature within the polymer composition to be heated, and an opportunity to apply the method of the invention to thick samples (several cm thick).

Advantageously, the light source may be preferably selected as a function of the heat-generating organic dye to be used: most advantageously, the light source may be one that emits light in the wavelength range where the dye most readily absorbs the light to generate an exotherm, which allows to bring a polymer composition above a desired threshold temperature. The heat-generating profiles of organic dyes known to absorb in the red or near infrared range of the light spectrum are known or can be readily determined by running an exotherm vs. wavelength graph using thermal imaging.

Briefly, the heat-generating potential of a red-NIR dye may be determined using an infrared thermal imaging camera, such as (Fluke TiX500) with a thermal resolution of about 1°C and a spatial resolution of 1.31 mRad by recording the heat released by the red-NIR dye in the resin (polymerizable component) under exposition to the suitable irradiation is described in detail in **[6].**

As will be readily apparent throughout the teachings of the present document, if a particular organic dye generates low/moderate heat at a given wavelength, one may still proceed with that particular dye at the same given wavelength by increasing the intensity of the light irradiation. This may be done by using a tunable power light source for example, such as commercially available tunable power red to near-infrared light sources.

| **Dye** | **RED or NIR Absorbance range** |
|---|---|
| IR 140 | 600-900nm |
| IR 780 | > 670nm |
| Indocyanine Green | 600-900 nm |
| IR 813 | > 670nm |
| S 2265 | 600-850 nm |
| S 0991 | > 650nm |
| Mn-Ph | 600-800nm |
| Dithiolene Nickel 1 | >750 nm |
| Chlorophyllin copper sodium salt | 550-700 nm |
| IR1048 | 700-1100 nm |

For illustration purposes, if IR 780 is used as heat-generating organic dye, a NIR laser@785nm may be used.

As discussed above, it is understood that the light source may be a tunable power light source; that is one that is equipped with tunable power, so as be able to adjust the power of the red to near infrared light irradiation, if needed. Such tunable power light source may also be used to determine the light intensity threshold at which a particular dye starts to absorb at any given wavelength, and therefore to fine-tune the wavelength/irradiation intensity that may be used to obtain optimal conditions for polymerization.

Likewise, the absorbance profiles of dyes known to absorb in the red or near infrared range of the light spectrum are known or can be readily determined by running an absorbance vs. wavelength graph. As will be readily apparent throughout the teachings of the present document, if a particular dye exhibits low/moderate absorbance at a given wavelength, one may still proceed with that particular dye at the same given wavelength by increasing the intensity of the light irradiation. This may be done by using a tunable power light source for example, such as commercially available tunable power red to near-infrared light sources. The combination of both techniques (heat-generation profile and absorbance profile) allows to identify/select organic dyes that may be suitable for carrying out the present invention, including the preferred irradiation wavelength for optimal exotherm generation.

### Preparation method

Polymer compositions comprising a red-to-NIR heat-generating organic dye may be prepared according to conventional methods that are known to the person of ordinary skill in the art.

For example, such polymer compositions may be prepared by mixing an already prepared polymer composition with the red-to-NIR heat-generating organic dye.

Alternatively, polymer compositions for practicing the present invention may be prepared by polymerizing monomers in the presence of red-to-NIR heat-generating organic dye (bulk synthesis). The reaction conditions and starting materials may be appropriately chosen to minimize the risk for the red-to-NIR organic dye to be involved in the polymerization process and/or to be degraded

### Preparation from existing polymer composition

Polymer compositions for carrying out the present invention may be prepared by a method including a step of mixing at least one heat-generating organic dye and a polymer or a polymer mixture. The heat-generating organic dye may be in solution in a suitable solvent. The polymer or a polymer mixture may also be in solution in a suitable solvent, which may be the same or different from the solvent of the dye solution. Alternatively, the heat-generating organic dye may be added to the polymer or a polymer mixture, or to a solution of polymer or a polymer mixture in a solvent.

The polymer may be any polymer that allows reducing to practice the present invention. It can be selected for example from the group comprising polystyrene; polyolefines, for example polyethylene, polypropylene, poly(alpha-olefine)s, polyisobutene and polypropylene; polyethers; polyesters; polyamides; polyacrylamides; polyacrylates; polysilanes; polysiloxanes.

The polymer may be a thermoplastic polymer selected from polyacrylates, polymethacrylates such as poly(methyl methacrylate), polyacrylonitrile butadiene styrene terppolymer, nylon, polylactic acid, polybenzimidazole, polycarbonate, polyestersulfone, polyoxymethylene, polyetherether ketone, polyetherimide, polyethylene, polyphenylene oxide, polyphenylene sulfide, polypropylene, polystyrene, polyvinyl chloride, polyvinylidene fluoride, or teflon.

The polymer may be a thermosetting polymer selected from epoxy resins, polyureas, phenolic resins, polyester resins, polyurethanes, polyimides, polycyanurates, or vinyl ester resins.

The polymer may be an elastomer.

The polymer may be a linear block copolymer or a statistic copolymer. The person skilled in the art will know how to identify appropriate experimental conditions, and the polymer or polymers to be used, to obtain a composite material having the requisite/desired properties.

"Block copolymers" as used herein refers to a sequenced polymer comprising more than one type of monomer. In a block copolymer, identical monomers are grouped together. Such polymers and methods for their preparation are described for example in Matyjazewski, K.; Eds.; Advances in Controlled/Living Radical Polymerisation, (American Chemical Society 2003) **[7]** or Hsieh, H. L.; Quirk, R. P.; Eds.; Anionic Polymerisation Principles and Practical Applications, (Marcel Dekker 1996) **[8].**

"Statistic copolymer" as used herein refers to a polymer in which the various monomers mix depending on their reactivity and concentration. Such polymers and methods for their preparation are described for example in Matyjaszewski, K.; Davies, T. P; Eds.; Handbook of Radical Polymerisation, (Wiley-Interscience 2002) **[9]** or Fontaine, L.; Initiation a la chimie et a la Physico-Chimie Macromoléculaires (Groupe Français d'Etudes et d'Applications des Polymères volume 12 (Chapitre 3)) **[10].**

### Bulk preparation by In situ polymerization

In another variant, polymer compositions for carrying out the present invention may be prepared by a method including a step of *in situ* polymerisation of a monomer or a mixture of monomers in the presence of at least one heat-generating organic dye.

The reaction conditions and starting materials may be appropriately chosen to minimize the risk for the red-to-NIR organic dye to be involved in the polymerization process and/or to be degraded. For example, if a photopolymerization process is chosen, the photoinititor (e.g. UV photoinitiator) and the red-to-NIR organic dye may be appropriately selected so that no (or low) overlap of their respective absorptions could exist, avoiding the risk for the NIR dye to be involved in the polymerization process and to be degraded.

Any conventional polymerization method may be used. For example, polymers and methods for their preparation are described for example in Matyjaszeski, K.; Eds. Advances in Controlled/Living Radical Polymerisation, (American Chemical Society 2003) **[7]**; Hsieh, H. L.; Quirk, R. P.; Eds.; Anionic Polymerisation Principles and Practical Applications, (Marcel Dekker 1996) **[8]**; Matyjaszewski, K.; Davies, T. P; Eds.; Handbook of Radical Polymerisation, (Wiley-Interscience 2002) **[9]** or Fontaine, L.; Initiation a la chimie et a la Physico-Chimie Macromoléculaires (Groupe Français d'Etudes et d'Applications des Polymères volume 12 (Chapitre 3)) **[10].**

When a block copolymer is involved, it can be a 2-block copolymer synthesized for example by controlled radical polymerisation or live anionic polymerisation or live cationic polymerisation, or a statistic copolymer synthesized by controlled radical polymerisation or non-controlled radical polymerisation.

Controlled radical polymerisation (CRP) is a method of choice for preparing well-defined polymers and copolymers with adjustable molar masses and low polymolecularity indexes. Techniques that can be used in the present invention are for example described in Matyjaszewski, K.; Davies, T. P; Eds.; Handbook of Radical Polymerisation, (Wiley-Interscience 2002) **[9]**

"Live polymerisation" as used herein refers to a polymerisation in which there is neither termination reactions nor transfer reactions, and where polymer chains keep on growing as long as there remains free monomer molecules to be added to chains. Live polymerisation may be cationic or anionic. Such methods are described for example in Matyjaszeski, K.; Eds. Cationic Polymerisation Mechanisms, Synthesis and Applications, (Marcel Dekker 1996) **[11]** or Hsieh, H. L.; Quirk, R. P.; Eds.; Anionic Polymerisation Principles and Practical Applications, (Marcel Dekker 1996) **[8].**

Monomers can all be introduced during the step of polymerisation. They also can be introduced separately or in a mixture, continuously or discontinuously. A supplemental monomer can also be introduced at the end of the polymerisation process, to obtain the desired polymer composition.

For example, the polymerizable component or monomer may be any C=C bond-containing compound polymerizable by free radical polymerization. Advantageously, at least one polymerizable component may be an ethylenically unsaturated monomer, the polymerization of which may be achieved by free radical polymerization. As used herein, the term "ethylenically unsaturated monomer" refers to a polymerizable components that contains at least one carbon-carbon double bond. Preferably, ethylenically unsaturated monomers whose polymerization may be effected by free radical polymerization, contains at least one carbon-carbon double bond that is conjugated with an aryl moiety (e.g., phenyl), a carboxyl (C=O) group, or another double bond. Such monomers in this category include for example acrylates -[(ROCO)CHCH₂]- (acrylic acid, methyl acrylate, ethyl acrylate, butyl acrylate, etc...), methacrylates -[(ROCO)C(Me)CH₂]- (methacrylic acid, methyl methacrylic acid, etc...), styrene, ethylene, propylene, N-vinyl acrylamide, N-vinylpyrolidone. For example, at least one polymerizable component may be selected from monomers, prepolymers, dimers, trimers or oligomers containing at least one C=C bond that is conjugated with an aryl moiety, a carboxyl group, or another double bond. For example, at least one polymerizable component may be selected from conjugated carboxylic acids such as acrylic acid, methacrylic acid, itaconic acid, crotonic acid, isocrotonic acid, maleic acid, and esters and amides thereof; or styrene, ethylene, propylene, N-vinyl acrylamide, or N-vinylpyrolidone.

For example, at least one polymerizable component may be an acrylate or methacrylate monomer. For example, at least one polymerizable component may be an acrylate monomer such as trimethylolpropane triacryalate (TMPTA). For example, at least one polymerizable component may be a methacrylate monomer such as (hydroxypropyl)methacrylate (HPMA), 1,4-butanediol dimethacrylate (1,4-BDDMA), 1,6-Bismethacryloxy-2-ethoxycarbonylamino-2,4,4-trimethylhexane (BMATMH) or methacrylate functionalized prepolymers such as aliphatic and aromatic diurethane dimethacrylates, for example UDMA.

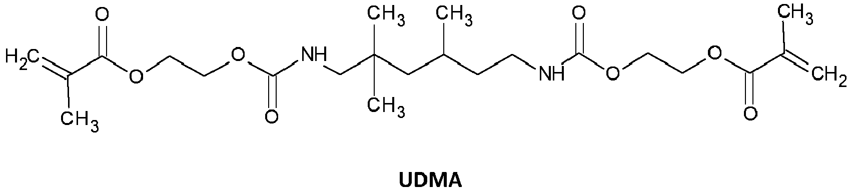

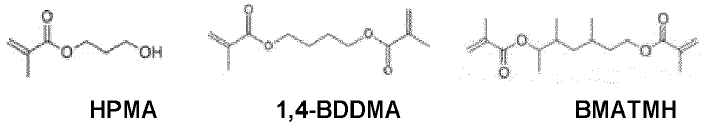

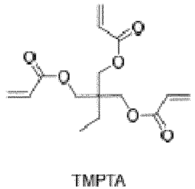

Advantageously, the polymerizable component may be a mixture of two or more monomers, prepolymers, dimers, trimers or oligomers containing at least one C=C bond that is conjugated with an aryl moiety, a carboxyl group, or another double bond, as described immediately above. For example, it may be a mixture of at least two compounds selected from methacrylate monomers such as HPMA, 1,4-BDDMA, BMATMH and methacrylate functionalized prepolymers such as aliphatic and aromatic diurethane dimethacrylates (e.g., UDMA). Examples of polymerizable components include mixtures of HPMA, 1,4-BDDMA and aliphatic and aromatic diurethane dimethacrylates such as UDMA, for example Mix-Ma as described herein. For example, the at least one polymerizable component may be selected from acrylates and methacrylates or mixture thereof, such as: 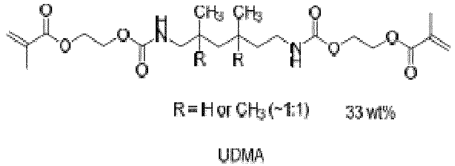 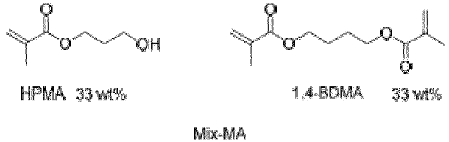 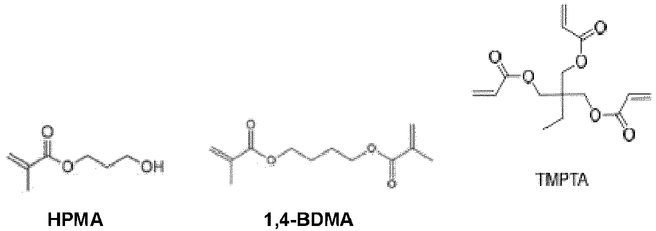 or a mixture of two or more of them, most preferably a 1:1:1 mixture by weight of HPMA, 1,4-BDMA and UDMA.

Methods/processes according to the invention can generally be carried out using conventional methods of preparing the above described polymers according to the present invention in a suitable mixing device such as, but not limited to, stirred tanks, dissolvers, homogenizers, microfluidizers, extruders, or other equipment conventionally used in the field.

Additives that are optionally incorporated during conventional polymerisation methods may be used according to the method of the invention. Thus, initiators, chain transfer agents, catalysts, antioxidants, lubricants, reinforcements/fillers known to the person skilled in the art can be used.

Examples of suitable additives include:
- pigments, such as colored pigments, fluorescent pigments, electrically conductive pigments, magnetically shielding pigments, metal powders, scratch-proofing pigments, organic dyes or mixtures thereof;
- light stabilizers such as benzotriazoles or oxalanilides;
- crosslinking catalysts such as dibutyltin dilaurate or lithium decanoate;
- slip additives;
- defoamers;
- emulsifiers, especially nonionic emulsifiers such as alkoxylated alkanols and polyols, phenols and alkylphenols or anionic emulsifiers, such as alkali metal salts or ammonium salts of alkanecarboxylic acids, alkanesulfonic acids, alkanol sulfonic acids or alkoxylated polyols, phenols or alkyl phenols;
- wetting agents such as siloxanes, fluorinated compounds, carboxylic monoesters, phosphoric esters, polyacrylic acids or their copolymers, polyurethanes or acrylate copolymers, which are commercially available under the trademark MODAFLOW ^{®} or DISPERLON ^{®};
- adhesion promoters such as tricyclodecan-dimethanol;
- leveling agents;
- film-forming adjuvants such as cellulose derivatives;
- flame retardants;
- sag control agents such as ureas, modified ureas and / or silicas,
- rheology control additives such as those described in patent documents WO 94/22968 **[12],** EP0276501A1 **[13],** EP0249201A1 **[14],** and WO 97/12945 **[15];**
- crosslinked polymeric microparticles, as described for example in EP0008127A1 **[16];**
- inorganic phyllosilicates such as aluminum magnesium silicate, magnesium sodium silicates or magnesium fluoride sodium lithium phyllosilicates of montmorillonite type;
- silicas such as aerosils^{®} silicas;
- flatting agents such as magnesium stearate; and/or
- tackifiers.

Mixtures of at least two of these additives are also suitable in the context of the invention.

As used herein, the term "tackifier" refers to polymers which increase the tack properties, that is to say, the intrinsic viscosity or self-adhesion, the compositions so that, after a slight pressure a short period, they adhere firmly to surfaces. When the polymerization method is used for the preparation of composites and / or laminated articles, the process may further comprise a step of adding a material / reinforcement designed for this purpose using known methods.

The polymerization method may thus further comprise a step of impregnating composite reinforcements with a mixture of the red-NIR heat-generating dye and at least one polymerizable component, in a mold, such as a silicone mold, prior to effecting polymerization.

The reinforcements/fillers used in composite polymer compositions in the context of the present invention may have a nanometric and/or micrometric size.

"Nanometric size material" a used herein refers to a material whose size is of a few nanometres in at least one of the space dimensions. For example, the size of the material in at least one of the space dimensions is between 1 and 20 nm, preferably between 1 and 2 nm.

"Micrometric size material" a used herein refers to a material whose size is between 1 and 100 microns.

Composite polymer compositions in the context of the present invention may comprise only micrometric size fillers, or only nanometric size fillers, or a mixture of micro and nanometric size fillers.

The composite reinforcements may be any reinforcing conventionally used in the manufacture and implementation of composite materials. For example, the composite reinforcements may be selected from any one or more of:
- Glass fibers
- Carbon fibers
- Aramid fibers (Kevlar^{®})
- Basalt fibers
- Silica fibers
- Silicon carbide fibers
- Polymer fibers
- Vegetal fibers (hemp, flax ...)
- Mineral, metallic or organic fillers (for example gravel, sand, glass beads, carbonate powder, alumina hydrate powder, steel powder, aluminum powder, polymer particles, titanium oxide, alumina, etc ...)

The composite reinforcements may be for example selected from glass fibers, carbon fibers, aramid fibers, basalt fibers, silica fibers, polymer fibers (such as polyesters, poly (p-phenylene-2,6 -benzobisoxazole), aliphatic and aromatic polyamides, polyethylene, polymethyl methacrylate, polytetrafluoroethylene), natural fibers (such as nettle, flax or hemp fibers) ... Advantageously, composite reinforcements may be glass fibers, carbon fibers such as carbon fiber fabrics, aramid fibers, basalt fibers, silica fibers, metallic fillers such as metallic nanoparticles, polymer fibers, natural fibers or carbon-based fillers such as carbon black, biochar, carbon fibers, carbon fiber fabrics or carbon nanostructures (such as carbon nanotubes or graphene), or a mixture of two or more of those. Advantageously, the composite reinforcements may be previously disposed in a mold, and then impregnated by a mixture of the red-NIR heat-generating dye and at least one polymerizable component before triggering polymerization. Alternatively, composite reinforcements may be pre-impregnated with a mixture of the red-NIR heat-generating dye and at least one polymerizable component. Then the resulting mixture may be deposited / spread evenly over the mold, either manually or using an automated robot, in the case of mass production, followed by polymerization.

### Uses/methods

In another aspect, the invention relates to the use of a heat-generating organic dye adsorbing in the red to near-infrared, for:
- reshaping a thermoplastic polymer article;
- bonding together two thermoplastic polymer or elastomer articles;
- separating two pieces of a thermoplastic polymer or elastomer article;
- self-healing or self-repairing a thermoplastic polymer article;
- recycling a composite polymer composition;
- recycling or depolymerizing a polymer; and/or
- separating two articles bonded by a polymer layer.

The practitioner has a well-established literature of synthetic organic and inorganic chemistry and polymer chemistry to draw upon, in combination with the information contained herein, for guidance on synthetic strategies, protecting groups, and other materials and methods useful for the preparaion of the polymer compositions useable in the context of the present invention. For example, the reader may refer to the Exemplification section below, and references cited therein for synthetic approaches suitable for the preparation of some of the compositions and polymer materials described herein. The reader may refer for references to references **[17]** and **[18],** which relate to phthalocyanine dyes. These are often simple to synthesize with relatively high yields and have been used as commercial pigments and dyes for decades.

The present invention offers many advantages, including:
- The photothermal approach of the present invention allows an efficient spatial control of the photothermal effect as illustrated in Scheme 1; the polymer composition containing the red-to-NIR organic dye gets heated at the site that is irradiated by red-to-NIR irradiation;
- Red-to-NIR organic dyes used in the context of the present invention are organic, and thus a lot more soluble in polymer matrices or polymer solutions in solvents (as compared to graphene oxide or other solid nanoparticles used in existing processes). This allows for a much better contact between the polymer and the red-to-NIR organic dye within the polymer composition, and hence a much more homogeneous and controllable heating process of the polymer bulk;
- Red to Near-infrared wavelengths induce a deeper penetration of the light with the polymer composition to be heated, thereby allowing better reprocessing/recycling of filled samples. As shown in Figure 19, the greater the wavelength, the less the light is diffused by the charges in the material. Thus, the heating of filled materials with a RED-NIR source is entirely possible for very thick polymer samples. This allows the handling of much thicker samples/polymer compositions;
- Cost efficiency (the process can be carried out at room temperature and under mild light irradiation);
- Environmentally friendly approach compared to oven heating;

Other advantages may also emerge to those skilled in the art upon reading the examples below, with reference to the attached figures, which are provided as non-limiting illustrations.

### EQUIVALENTS

The representative examples that follow are intended to help illustrate the invention, and are not intended to, nor should they be construed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. It should further be appreciated that the contents of those cited references are incorporated herein by reference to help illustrate the state of the art.

The following examples contain important additional information, exemplification and guidance that can be adapted to the practice of this invention in its various embodiments and the equivalents thereof.

### EXEMPLIFICATION

The polymer materials and compositions of this invention and their preparation can be understood further by the examples that illustrate some of the processes by which these polymer materials and compositions are prepared or used. It will be appreciated, however, that these examples do not limit the invention. Variations of the invention, now known or further developed, are considered to fall within the scope of the present invention as described herein and as hereinafter claimed.

### Summary:

In the Examples that follow is illustrated the use of a NIR organic dye (fully soluble in the polymer contrary to fillers such as graphene oxide or nanoparticles) that could be used, subsequent to the polymerization process, for a light-to-heat conversion enabling the increase of the thermoplastic temperature beyond its glass transition temperature. Using this strategy, a modification of the thermoplastic's mechanical properties could be achieved and self-healing of the polymer or the possibility to develop a recycling process based on a bonding/debonding strategy done on demand through NIR irradiation could be promoted. This last strategy constitutes an environment-friendly approach to recycle polymers compared to oven heating. Especially, the main advantage of this photothermal approach is to allow an efficient spatial control of the photothermal effect as illustrated in Scheme 1. More precisely, increase of the temperature is only observed in the irradiated areas e.g. for healing or debonding of multimaterials.

### Materials and methods

Trimethylolpropane triacrylate (TMPTA) was purchased from Sigma-Aldrich, phenyl *bis*(2,4,6-trimethylbenzoyl)-phosphine oxide (SPBPO) was obtained from Lambson Ltd (UK), IR-813 p-toluenesulfonate (IR-813) was ordered from Tokyo Chemical Industry (TCI-europe) and used as received, crayvallac SLT was provided from Arkema and Glyfoma was supplied from Evonik. The squaraine (SQ) was synthesized according to a procedure recently reported in the the literature [19] without modification and in similar yield. Chemical structures of the different monomers and additives are presented in the scheme 2 except that of the crayvallac SLT which is used as a thickener.

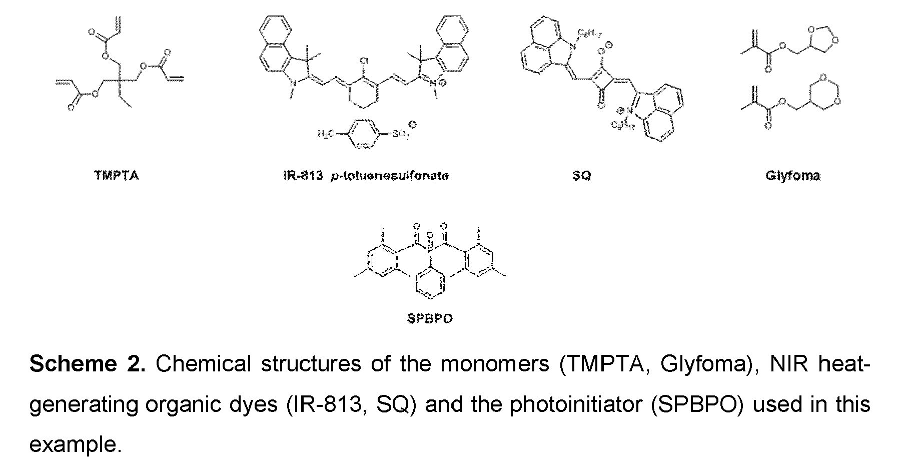

Mass spectroscopy was performed by the Spectropole of Aix-Marseille University. ESI mass spectral analyses were recorded with a 3200 QTRAP (Applied Biosystems SCIEX) mass spectrometer. The HRMS mass spectral analysis was performed with a QStar Elite (Applied Biosystems SCIEX) mass spectrometer. Elemental analyses were recorded with a Thermo Finnigan EA 1112 elemental analysis apparatus driven by the Eager 300 software. ¹H and ¹³C NMR spectra were determined at room temperature in 5 mm o.d. tubes on a Bruker Avance 400 spectrometer of the Spectropole: ¹H (400 MHz) and ¹³C (100 MHz). The ¹H chemical shifts were referenced to the solvent peak CDCl₃ (7.26 ppm), DMSO (2.49 ppm) and the ¹³C chemical shifts were referenced to the solvent peak CDCl₃ (77 ppm), DMSO (49.5 ppm).

### Example 1. Polymerization in bulk incorporating heat-generating organic dye Thermoset polymer

Thermoset polymer samples were prepared to test the heater effect for in-situ embedded NIR dyes.

A multifunctional acrylate monomer (TMPTA, 3g (98.9%wt)) was mixed with a UV photoinitiator (SPBPO, 0.03g (1%wt)). In addition, a heat-generating organic dye (0.003g (0.1%wt)) - which is a NIR organic dye (here, IR-813 or SQ, fully soluble in TMPTA) - was incorporated into the photocurable resin before being polymerized under laser diode at 405 nm.

The experiment was repeated using the same amounts of TMPTA (3g) and SPBPO (0.03g) but by varying the heat-generating dye concentration/content: 0.01% wt, 0.02% wt, 0.04% wt, 0.05% wt, 0.08% wt, and 0.2% wt. The % wt are expressed with respect of the total weight of the composition.

### Thermoplastic polymer

Once the heater effect was confirmed, thermoplastic samples were prepared. A monomer (Glyfoma, 3g (96.9%wt)) was selected as a benchmark monofunctional monomer leading to a thermoplastic polymer. A thickener (crayvallac SLT, 0.03g (1%wt)) was added to control the viscosity of the photocurable sample. Then, the photoinitiator (SPBPO, 0.06g (2%wt)) and the NIR heater (IR-813 or SQ, 0.003g (0.1%wt)) were incorporated in the resins.

Likewise, the experiment was repeated using the same amounts of Glyfoma (3g), crayvallac SLT (0.03g) and SPBPO (0.06g) but by varying the heat-generating dye concentration/content: 0.01% wt, 0.02% wt, 0.04% wt, 0.05% wt, 0.08% wt, and 0.2% wt. The % wt are expressed with respect of the total weight of the composition.

The photopolymerization experiments enabling to access to thermosets or thermoplastics were carried out at room temperature upon irradiation with a laser diode at 405 nm (450 mW.cm⁻²) in a mold. The UV photoinitiator and the two NIR dyes were appropriately selected so that no (or low) overlap of their respective absorptions could exist, avoiding the risk for the NIR dye to be involved in the polymerization process and to be degraded. A Jasco 6600 real-time Fourier transformed infrared spectroscopy (RT-FTIR) was used to follow the C=C acrylate double bond conversion between 6100 and 6200 cm⁻¹ according to the irradiation time of 2 mm thick samples.

### 1. Infrared thermal imaging camera

In order to follow the heater effect of the NIR dyes in-situ embedded in thermoset or thermoplastic samples, different NIR light sources were used: i) laser diodes @785, 940, 980 and 1064 nm or ii) LED@850 nm. Excitations with the NIR light source were done at a distance of 2 cm for the laser diodes and 6 cm for LEDs. A Fluke TiX500 infrared thermal imaging camera was used to follow in real time the temperature reached by the polymer.

### 2. UV-VIS Absorption spectroscopy

A Jasco V-750 spectrophotometer was used to measure the UV-Vis absorption spectra of both IR-813 and SQ in toluene and acetonitrile.

### 3. Differential Scanning Calorimetry (DSC)

A DSC Mettler Toledo DSC1 coupled to the Star software was used to determine the glass transition temperature of the thermoplastic samples. These latter were heated twice: a first run was carried out to erase their thermal backgrounds and a second run was performed in order to determine the T_{g} by drawing the tangent of the transition phase.

### 4. Thermogravimetric analysis (TGA)

A Mettler Toledo TGA DSC 3+ and the Star software were used to measure the thermal decomposition temperature of the heaters. These latter were heated from 30°C to 900°C with a rise in temperature of 10 K.min⁻¹.

### 5. Optical microscopy

A PX-8085-919 optical microscope (from Somikon) was used to follow the evolution of scratched thermoplastic samples over irradiation time. This optical microscope has a 200 magnification factor which allows higher quality pictures.

### 6. Results

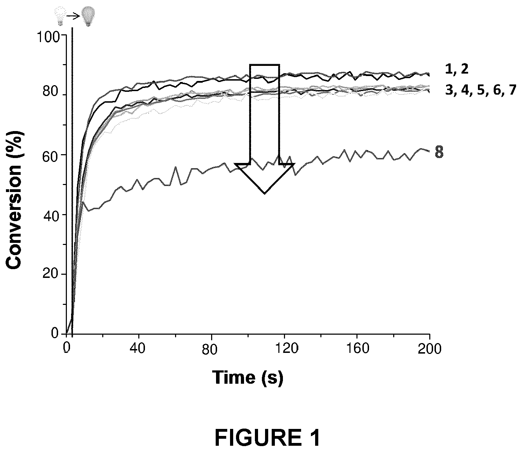

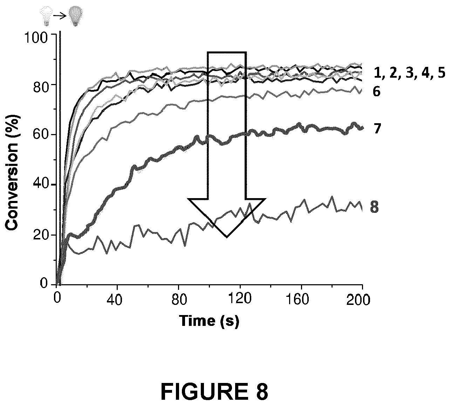

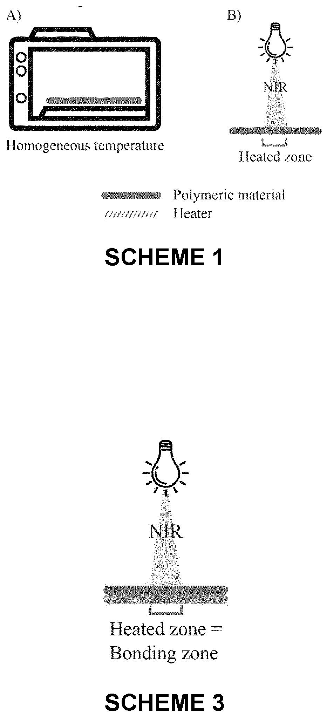

Photopolymerizations of TMPTA-based photosensitive resins were recorded by RT-FTIR in order to follow the acrylate function conversion in the presence of different heater contents. The kinetics recorded for different concentrations of IR-813 are depicted in Figure 1 and those with SQ are given in Figure 8.

As shown in Fig. 1, the final acrylate function conversion is unaffected when the IR-813 concentration is under 0.1%wt but a decrease in the final monomer conversion is observed for higher concentration. This phenomenon can be ascribed to a light absorption by the dye @405nm in competition with that of the photoinitiator (SPBPO). For SQ, a similar behavior was observed; the polymerization profiles were not affected for a NIR dye content lower than 0.08 %wt but poorer profiles are observed for higher contents due to this filter effect. The molar extinction coefficients of IR-813 and SQ have been evaluated from their UV-Visible absorption spectra using the Beer-Lambert law and are reported in the Table 1.

**Table 1. Molar extinction coefficients of IR-813 and SQ in toluene calculated from their UV-visible absorption spectra using the Beer-Lambert law A = ε l c at 405 nm.**

| | IR-813 | SQ |
|---|---|---|
| ε (L.mol⁻¹.cm⁻¹) | 5600 | 3800 |

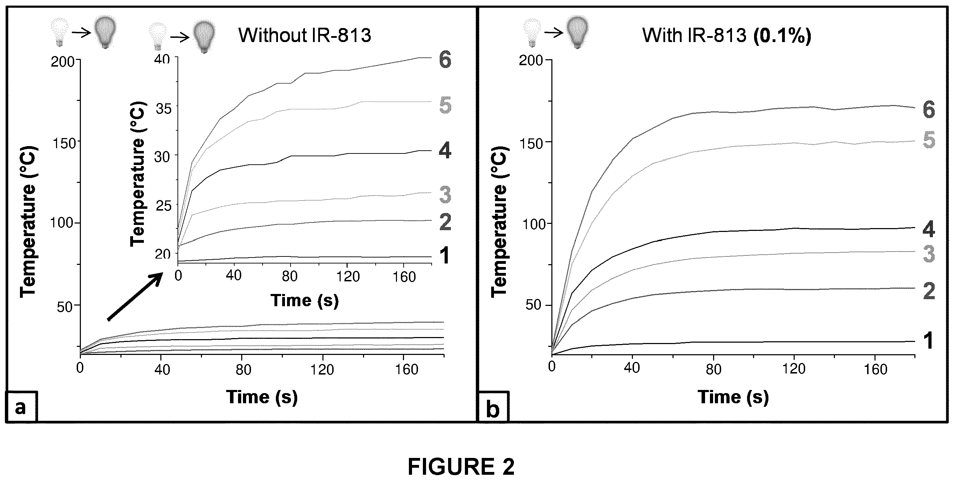

In this Example, we showed that it was possible to in-situ embed a NIR heat-generating organic dye into a polymer film. Specifically, this was achieved by photopolymerizing a TMPTA monomer with a UV-visible photoinitiator (SPBPO) upon excitation at 405 nm. In a second step, NIR heat-generating organic dyes can be used to activate the photothermal effect by irradiation with a NIR light. Indeed, heat-generating organic dyes will release heat by absorbing the NIR light. Various parameters influencing the maximum temperature reached by the polymer films were investigated, namely the irradiance (see Figure 2), the choice of the NIR heat-generating organic dye (SQ *vs.* IR-813), the NIR heat-generating organic dye weight content or the NIR irradiation wavelength.

### Irradiance

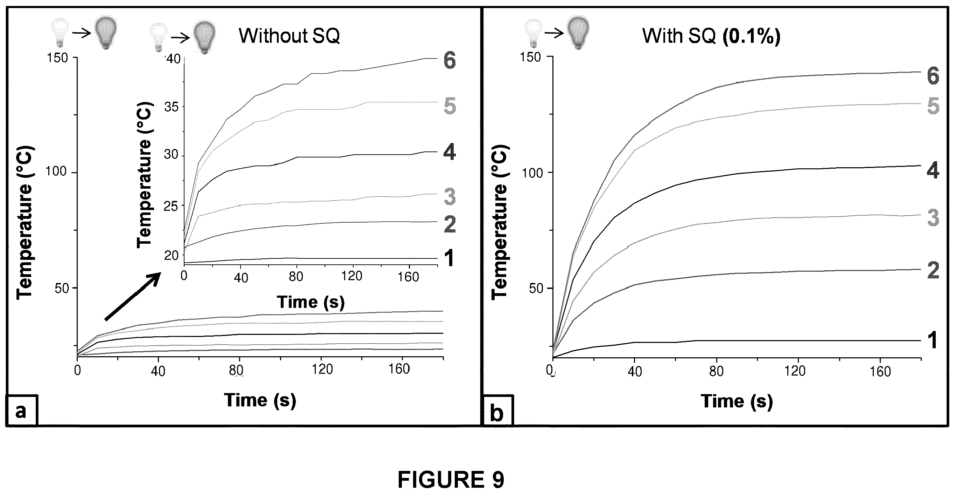

Figure 2 clearly shows a huge increase of the polymer temperature in the presence of IR-813 and irradiation of the polymer films with a NIR light. It is possible to control the temperature reached by the polymer by controlling the irradiance *i.e.* a higher irradiance leading to a higher temperature. The same behavior was demonstrated with SQ as the NIR dye (see Figure 9). For both NIR heat-generating organic dyes, the maximal temperatures reached by the polymer films *vs.* the irradiance followed a linear plot. This can be highly useful to control the processing of the polymer when a given temperature is desired for shaping, bonding/debonding, self-healing or recycling processes. For the different polymers prepared in the same conditions but not containing a NIR heat-generating organic dye, only a very slight increase of the temperature was observed and the final value reached never exceeded 40°C contrary to more than 150°C in the presence of the NIR heat-generating organic dyes. This clearly shows that the presence of the NIR heat-generating organic dyes and the use of a NIR light were both required to drastically increase the temperature of the polymer films and thus the easiness for (re)reprocessing the polymer films.

### NIR wavelength

Another factor influencing the maximal temperature reached by the polymer film is the selected NIR wavelength. Indeed, the two NIR dyes can absorb differently in the NIR range and preferential wavelengths can be thus selected to improve the light-to-heat conversion. To illustrate this, by absorbing more light, the NIR can thus produce more heat. Therefore, it is of utmost interest to get a good matching between the emission wavelength of the NIR light used to excite the NIR heat-generating organic dyes and their respective absorptions. Table 2 summarizes the different temperatures reached by the polymer films at different irradiation wavelengths, for the reference system (without heat-generating organic dye) and the systems comprising a NIR heat-generating organic dye. The presence of a NIR heat-generating organic dye is clearly necessary *i.e.* without NIR heat-generating organic dye, a very low photothermal effect is found (T < 40°C, Table 2).

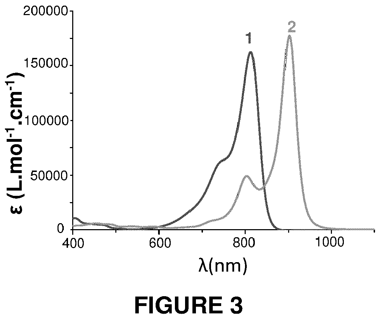

Two trends can be clearly established from these results; notably that IR-813 is more adapted for irradiations with shorter NIR wavelengths (approximately under 850 nm) *i.e.* at 785 nm, a temperature as high as 170°C could be reached. Conversely, the system comprising SQ is more adapted for irradiation with longer NIR wavelengths (approximately over 850 nm) e.g. a temperature above 256°C could be reached for the SQ-based systems upon excitation at 1064 nm whereas the temperature only reached 38°C for the IR-813-based system. These results are in perfect agreement with the NIR light absorption properties of the two dyes as it is shown in the Figure 3.

**Table 2. Maximal temperature reached for the TMPTA-based polymers in the presence of heaters (0.05%_{wt}) upon irradiation at different NIR wavelengths. The irradiance was 2.55 W.cm⁻² at 785 nm, 1 W.cm⁻² at 850 nm, 2.16 W.cm⁻² at 940 nm, 3.12 W.cm⁻² at 980 nm and 3.12 W.cm⁻² at 1064 nm.**

| | Without NIR heat-generating organic dye | NIR heat-generating organic dye IR-813 | NIR heat-generating organic dye SQ |
|---|---|---|---|
| 785 nm | 40°C | 171°C | 143°C |
| 850 nm | 38°C | 87°C | 97°C |
| 940 nm | 28°C | 54°C | 174°C |
| 980 nm | 27°C | 59°C | 260°C |
| 1064 nm | 32°C | 38°C | 256°C |

### Heat-generating organic dye concentration

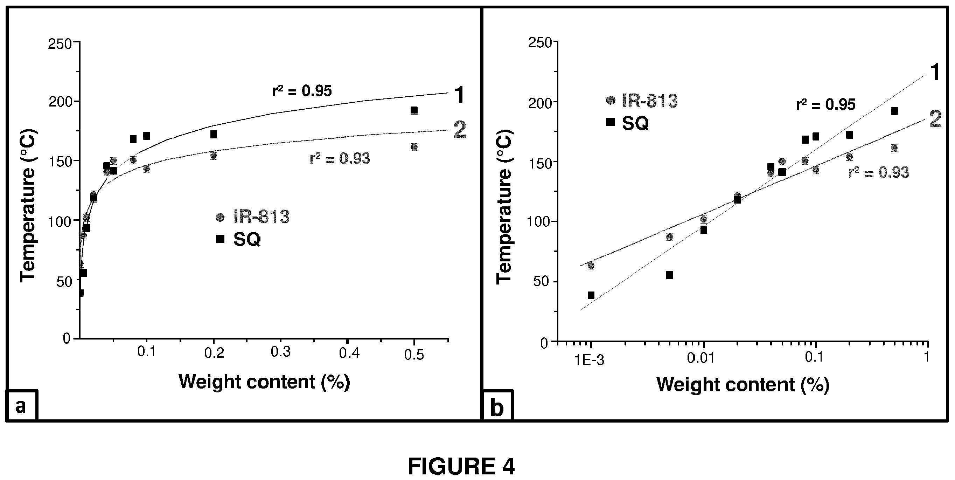

Another parameter governing the temperature reached by the polymer films is the heat-generating organic dye concentration. As shown in Figure 4, only a very low content of heat-generating organic dye is necessary to reach an efficient photothermal effect (Figure 4a; < 0.05-0.1% w/w). A linear correlation can be established for the two dyes by plotting the temperature vs. the heat-generating organic dye's weight content when a logarithmic scale is used for the abscissa (Figure 4b). These heat-generating organic dyes could potentially be used for the reprocessing or the reactivation of the thermoplastics on request as high temperatures can be reached even for very low heat-generating organic dye contents (<0.1%wt).

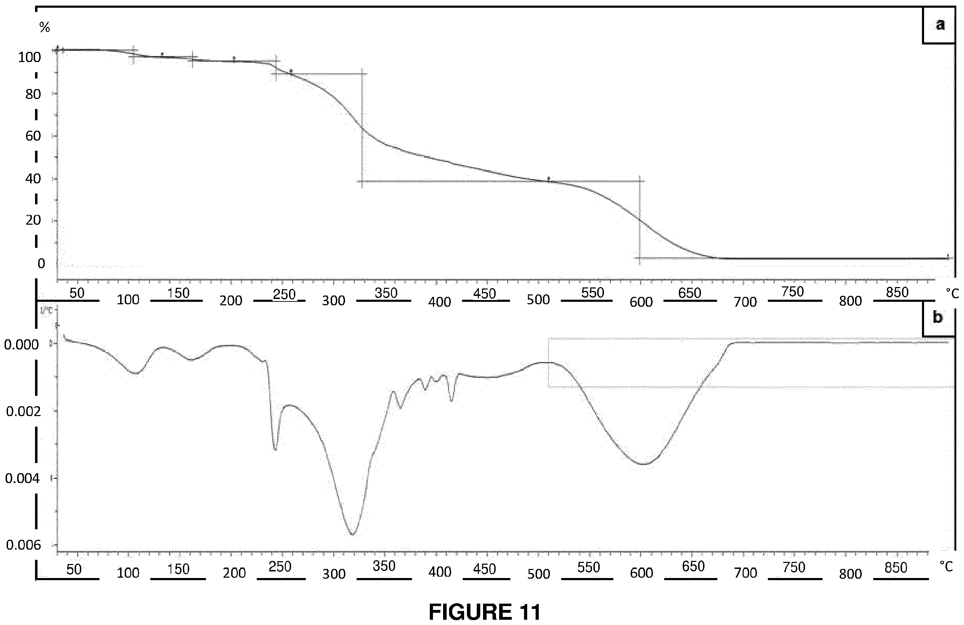

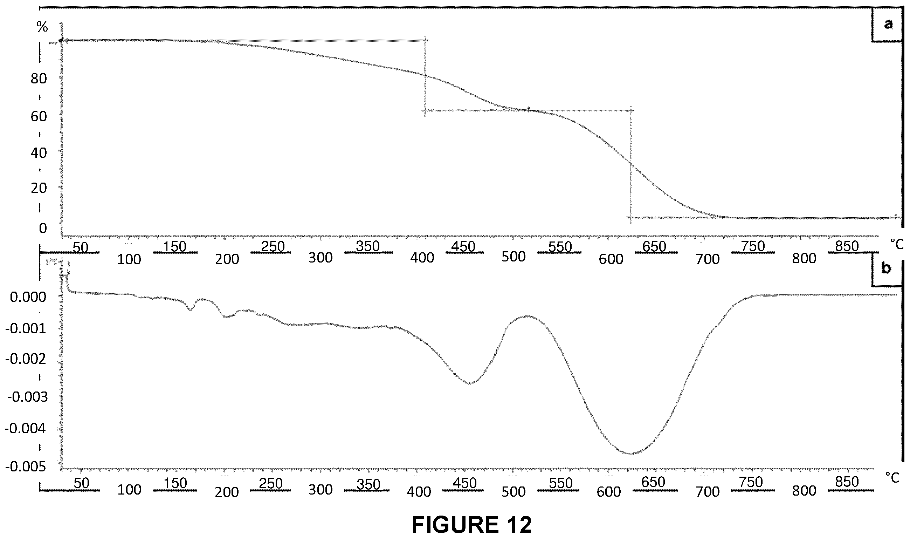

It has been shown that IR-813 is not decomposed before 250°C (Figure 11) and that SQ is still in good shape until 400°C (Figure 12). Considering that T_{g} of important classes of thermoplastics are below 150°C, the approach of the present invention reveals to be already very powerful and adapted for most of these thermoplastics. Therefore, in a second step, the two NIR heat-generating organic dyes examined in this work have been used in combination with thermoplastics.

### Example 2. Bonding/debonding

Some tests have been performed on a thermoplastic material based on Glyfoma in order to reprocess it *i.e.* self-healing and bonding/debonding applications were first investigated to show the interest of the inventive approach.

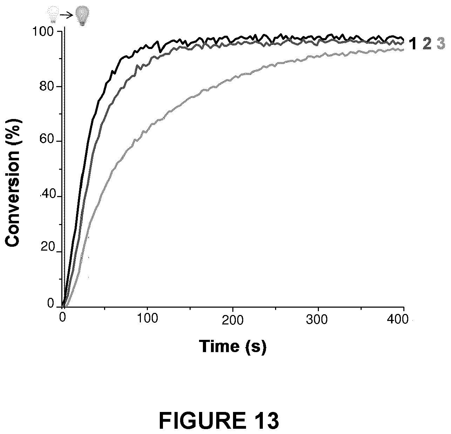

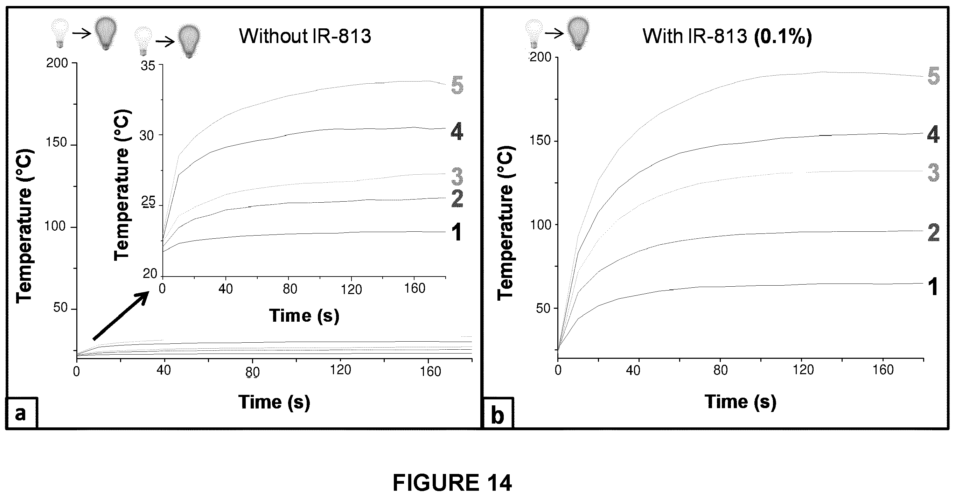

As shown above for TMPTA, the photopolymerization of Glyfoma in the presence of SPBPO is not affected by the presence of IR-813 when its content is under 0.1%wt (Figure 13). Furthermore, the presence of NIR heat-generating organic dye in the synthesized polymers allows their activation with a NIR light e.g. a temperature as high as 190°C can be reached by irradiation at 785 nm (2 W.cm⁻²) in the presence of IR-813 (Figure 14).

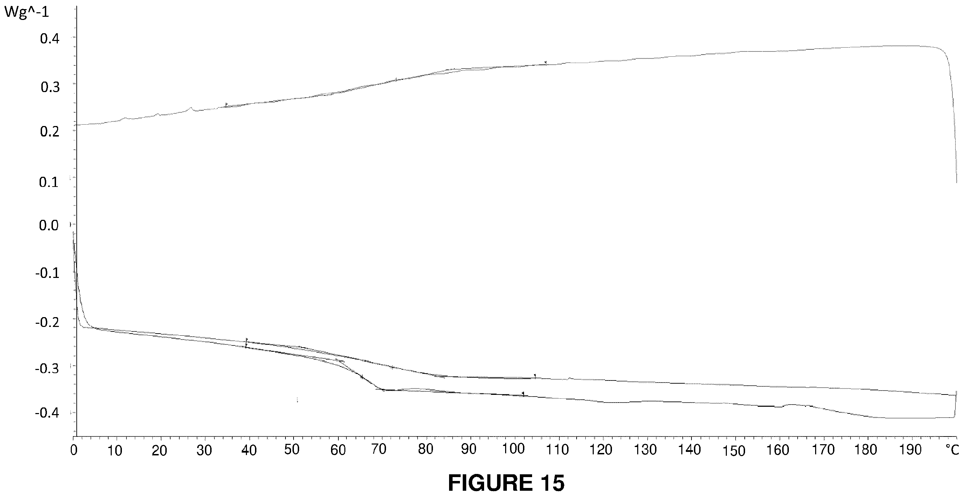

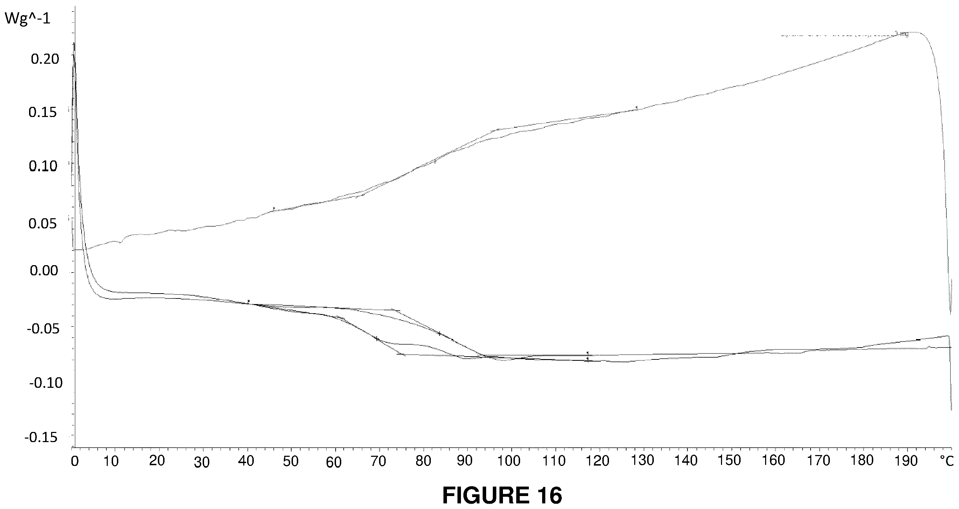

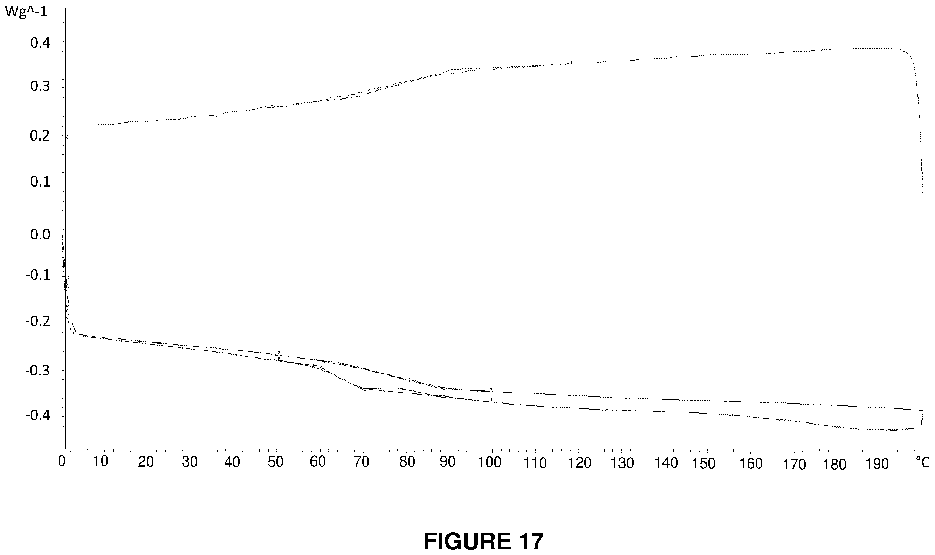

To characterize the thermoplastics obtained, DSC measurements have been carried out on the reference system (without heat-generating organic dye) and on systems with NIR heat-generating organic dye in-situ embedded after a first photopolymerization step done at 405 nm. The glass transition temperatures of the prepared glyfoma-based polymers are around 70-80°C (see Figures 15-17).

As illustrated in Scheme 3, a possible bonding strategy between two thermoplastics could consist in incorporating the NIR heat-generating organic dye in each of them and irradiating them with a NIR light. Increase of the temperature above the T_{g} upon excitation with a NIR light will enable the interpenetration of the polymer chains of the two polymer films, leading to a strong bonding of both materials.

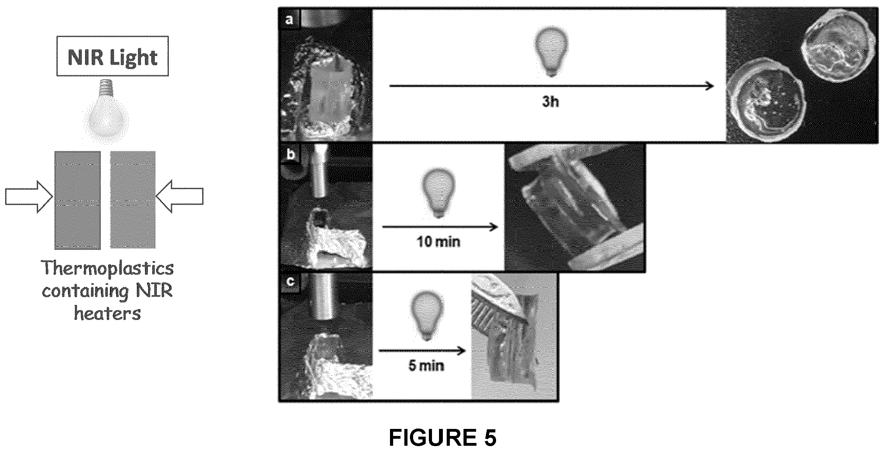

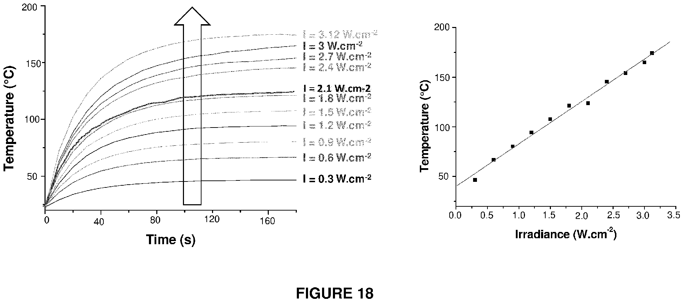

Therefore, to bond two thermoplastics together, a simple experiment has been designed: two polymers were held together and irradiated from the top side. As shown in the Figure 5a, thermoplastics free of heat-generating organic dye could not be bonded even after 3 hours of irradiation with a NIR light as the temperature reached by the polymers (not even 45°C) was lower than its T_{g}. However, thermoplastics containing a heat-generating organic dye could be bonded together very efficiently after only 10 minutes of NIR light irradiation with SQ (Figure 5b) as the temperature reached by the polymers was high enough (almost 100°C), overcoming the T_{g}. For IR-813, the thermoplastics could be bonded together even more rapidly, within 5 minutes (Figure 5c) in agreement with a higher photothermal effect (more than 150°C) with IR-813 @785 nm. For wavelengths > 850 nm, faster bonding can be obtained using SQ in agreement with its better heater behavior than IR-813 for longer wavelengths (see above) e.g. in Glyfoma based thermoplastic polymer, temperature > 150°C can be obtained @980 nm using SQ heater (Figure 18). It is noteworthy to mention that the bonding is totally reversible, the separation of the two thermoplastic polymers being possible by re-irradiating the polymers with NIR light.

### Example 3. Reshaping

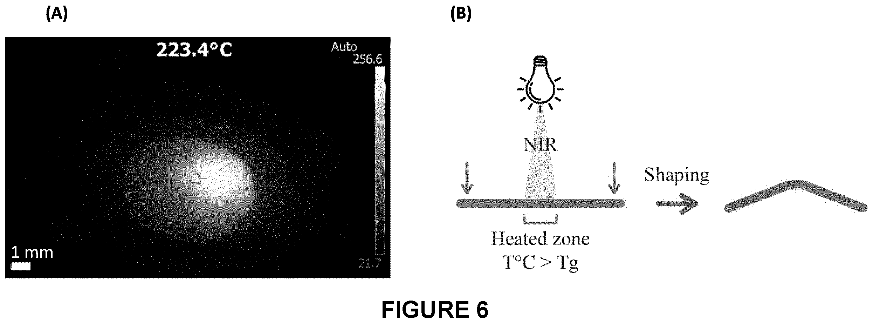

As already mentioned, the advantage of using laser diodes over ovens is the possible spatial control the heated zone (Figure 6A). In the case of a thermoplastic (e.g., glyfoma-based thermoplastic polymer of Example 1), the control of this heated zone allows to get a good precision on its shape modification as shown in Figure 6B for the shaping of a thermoplastic.

### Example 4. Self-healing

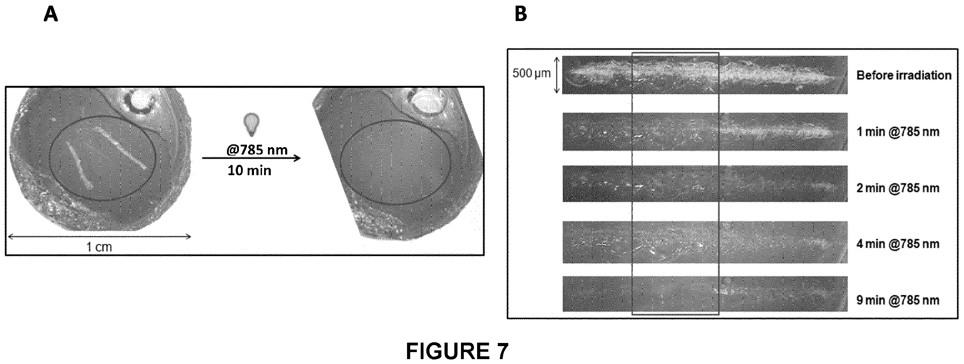

Some self-healing experiments have also been carried out in order to characterize the ability of the polymer films to recover their initial shape by chain mobility above the T_{g}. Scratches of around 100 µm depth and 500 µm width were made to Glyfoma-based thermoplastic films of Example 1 and could be very efficiently healed just by irradiating the surface with NIR light. As shown in the Figure 7A, after only 10 minutes of NIR irradiation at 785 nm (2.55 W.cm⁻²), the scratches were already healed. Evolution of a scratch upon NIR irradiation at 785 nm is given in the Figure 7B. This self-healing ability is possible as the temperature reached by the thermoplastic was higher than its T_{g} (more than 100°C above the T_{g} in this case).

The results of Examples 2-4 illustrate the range of possible applications for thermoplastics self-healing, shaping and/or reprocessing upon NIR light.

### Conclusions

The Examples that precede show that the temperature of different polymers (thermosets or thermoplastics) could be finely tuned by using low NIR heat-generating organic dye content (<0.1% w/w). Specifically, polymeric materials containing a very low amount of stimuli-responsive compound were prepared by using a benchmark UV photoinitiator. An organic dye strongly absorbing in the near infrared region has been selected as the stimuli-responsive compound. When excited by a NIR light, this dye can act as an efficient heat-generator which release heat in a controlled manner to its environment. The heat released by irradiation with an inexpensive and highly penetrating (depth in the cm range) NIR light source allows the development of an unprecedented approach for reprocessing, reshaping, recycling, self-healing and even to modify the structure of thermoplastic polymers. For this purpose, it is important to reach a high temperature to overcome the glass transition temperature (T_{g}), leading to mechanical properties modification. Several parameters have been studied in order to increase the polymer temperature: the wavelength of the NIR irradiation, the irradiance of the NIR light source, the choice of heater (IR-813 p-toluenesulfonate or a squaraine dye) and the heater concentration.

By mean of a careful selection of the NIR dye structure, the concentration but also the excitation wavelength and the irradiance could be used as efficient tools to control the heat released to the polymer. The good thermal stability of SQ and IR-813 coupled with the low glass transition temperature of the thermoplastic used in the Examples allowed a large flexibility in the operating temperature for reprocessing. Notably, to evidence the pertinence of the strategy, two selected examples were given through bonding/debonding and self-healing applications. IR-813 was found to be more effective upon irradiation at short NIR wavelengths (785-850 nm) whereas SQ was more effective at longer NIR wavelengths (850-1064 nm).

The thermoplastics bonding experiments showed promising results since two pieces of polymers could be pasted together after a short time of NIR irradiation. Reversibility of the bonding was also demonstrated, still while using a NIR light as the activation source. Finally, self-healing ability of the Glyfoma-based thermoplastic was investigated and furnished impressive results even for large scratches. Notably, scratches as deep as 100 µm and with a width as large as 500 µm could be healed after only a few minutes of NIR irradiation.

While we have described a number of embodiments of this invention, it is apparent that the Examples may be altered to provide other embodiments that utilize the compositions and methods of this invention. Therefore, it will be appreciated that the scope of this invention is to be defined by the appended claims rather than by the specific embodiments that have been represented herein by way of example.

### REFERENCES

**[1]** IUPAC. Compendium of Chemical Terminology, 2nd ed. (the "Gold Book").
**[2]** Ajayaghosh, A. Chemistry of Squaraine-Derived Materials: Near-IR Dyes, Low Band Gap Systems, and Cation Sensors. Acc. Chem. Res. 2005, 38, 449-459.
**[3]** Bures, F. Fundamental aspects of property tuning in push-pull molecules. RSC Adv. 2014, 4, 58826-58851.
[4] Alfred Treibs und Franz-Heinrich Kreuzer. Difluorboryl-Komplexe von Di- und Tripyrrylmethenen. Justus Liebigs Annalen der Chemie 1968, 718 (1): 208-223; BODIPY Dye Series Archived 2008-02-26 at the Wayback Machine.
**[5]** K. L. Marshall, G. Painter, K. Lotito, A. G. Noto & P. Chang (2006) Transition Metal Dithiolene Near-IR Dyes and Their Applications in Liquid Crystal Devices, Molecular Crystals and Liquid Crystals, 454:1, 47/[449]-79/[481].
**[6]** Garra, P. , Bonardi, A. , Baralle, A. , AI Mousawi, A. , Bonardi, F. , Dietlin, C. , Morlet-Savary, F. , Fouassier, J. and Lalevée, J., Monitoring photopolymerization reactions through thermal imaging: A unique tool for the real-time follow-up of thick samples, 3D printing, and composites. J. Polym. Sci. Part A: Polym. Chem., 2018, 56: 889-899.
[7] Matyjaszewski, K. ; Eds. ; Advances in Controlled/Living Radical Polymerization, (American Chemical Society 2003)
[8] Hsieh, H. L. ; Quirk, R. P. ; Eds. ; Anionic Polymerization Principles and Practical Applications, (Marcel Dekker 1996)
[9] Matyjaszewski, K.; Davies, T. P; Eds.; Handbook of Radical Polymerization, (Wiley-Interscience 2002)
[10] Fontaine, L. ; Initiation a la Chimie et a la Physico-Chimie Macromoléculaires (Groupe Français d'Etudes et d'Applications des Polyméres volume 12 (Chapitre 3))
[11] Matyjaszewski, K. ; Eds. ; Cationic Polymerizations Mechanisms, Synthesis, and Applications, (Marcel Dekker 1996)
[12] WO 94/22968
[13] EP0276501A1
[14] EP0249201A1
[15] WO 97/12945
[16] EP0008127A1
[17] Dahlen, M. A. The Phthalocyanines A New Class of Synthetic Pigments and Dyes. Ind. Eng. Chem. 1939, 31 (7), 839-847 DOI: 10.1021/ie50355a012
[18]] Torre, G. de la; Claessens, C. G.; Torres, T. Phthalocyanines: Old Dyes, New Materials. Putting Color in Nanotechnology. Chem. Commun. 2007, 0 (20), 2000-2015 DOI: 10.1039/B614234F.
[19] Strassel, K. ; Kaiser, A. ; Jenatsch, S. ; Véron, A.C. ; Anantharaman, S.B. ; Hack, E. ; Diethelm, M. ; Nüesch, F. ; Aderne, R. ; Legnani, C. ; Yakunin, S. ; Cremona, M. ; Hany, R. Squaraine Dye for a Visibly Transparent All-Organic Optical Upconversion Device with Sensivity at 1000 nm. ACS Applied Materials & Interfaces 2018, 10, 11063-11069.

## Claims

1. Process for bringing a polymer composition above a threshold temperature on demand, wherein:
the polymer composition comprises 0,01 to 0,5% weight of at least one heat-generating organic dye that generates heat above the threshold temperature when exposed to a given range of red to near-infrared irradiation, and
the process comprises exposing the polymer composition to red to near-infrared irradiation at a wavelength within the red to near-infrared range where the heat-generating organic dye generates heat above the threshold temperature, the weight % being expressed with respect to the total weight of the polymer composition.

2. Process according to claim 1, wherein the threshold temperature is the glass transition temperature of the polymer composition, the depolymerization temperature of the polymer composition, the melting temperature of the polymer composition, or the decomposition temperature of the polymer composition.

3. Process according to claim 2, wherein the polymer composition comprises a thermoplastic polymer, the threshold temperature is the glass transition temperature of the polymer composition and the process is for reshaping a thermoplastic polymer article on demand under the triggering action of red to near-infrared irradiation; the process comprising:
a) exposing the region of the article to be reshaped to red to near-infrared irradiation at a wavelength within the red to near-infrared range where the heat-generating organic dye generates heat above, for example at least 10°C above, the glass transition temperature of the thermoplastic polymer composition; thereby softening the region of the article that is subjected to red to near-infrared irradiation;
b) reshaping the region of the polymer article exposed to red to near-infraed irradiation, to give the polymer article the new desired shape; optionally under continuous exposure to the red to near-infrared irradiation allowing the heat-generating organic dye to generate heat above, for example at least 10°C above, the glass transition temperature of the thermoplastic polymer;
c) stopping the red to near-infrared irradiation; and
d) letting cool to a temperature below the glass transition temperature of the thermoplastic polymer, such as room temperature, thereby allowing the thermoplastic polymer article to set into the new shape.

4. Process according to claim 2, wherein the polymer composition comprises a thermoplastic polymer or an elastomer,the threshold temperature is the glass transition temperature of the polymer composition and the process is for bonding together two articles made of thermoplastic polymer or an elastomer; under the triggering action of red to near-infrared irradiation; the process comprising:
a) providing two articles made of a thermoplastic polymer or an elastomer, the thermoplastic polymer or elastomer comprising at least one heat-generating organic dye that generates heat above, for example at least 10°C above, the glass transition temperature of the thermoplastic polymer or elastomer when exposed to a given range of red to near-infrared irradiation;
b) contacting a surface of each thermoplastic polymer or elastomer article together;
c) exposing the region of contact between the surfaces of the thermoplastic polymer or elastomer article, to red to near-infrared irradiation at a wavelength within the red to near-infrared range where the heat-generating organic dye generates heat above, for example at least 10°C above, the glass transition temperature of the thermoplastic polymer or elastomer, thereby softening the polymer matrix in the region of surface contact exposed to red to near-infrared irradiation and allowing the contact region between the two polymer articles to seal;
c) stopping the red to near-infrared irradiation; and
e) letting cool to a temperature below the glass transition temperature of the thermoplastic polymer or elastomer, such as room temperature, thereby allowing the surfaces of two thermoplastic polymer or elastomer articles to be solidly bound together.

5. Process according to claim 2, wherein the polymer composition comprises a thermoplastic polymer or an elastomer,the threshold temperature is the glass transition temperature of the polymer or elastomer composition and the process is for separating two pieces of a thermoplastic polymer or elastomer article under the triggering action of red to near-infrared irradiation, the process comprising:
a) providing an article made of thermoplastic polymer or an elastomer, constituted with two pieces of thermoplastic polymer or elastomer sealed together by a process according to claim 4;
b) exposing the sealed region between the two pieces of thermoplastic polymer or elastomer to red to near-infrared irradiation at a wavelength within the red to near-infrared range where the heat-generating organic dye generates heat above, for example at least 10°C above, the glass transition temperature of the thermoplastic polymer, thereby softening the polymer or elastomer matrix in the region of thermoplastic polymer or elastomer exposed to the red to near-infrared irradiation;
c) pulling apart the two pieces of thermoplastic polymer to separation.

6. Process according to claim 2, wherein the polymer composition comprises a thermoplastic polymer, the threshold temperature is the glass transition temperature of the polymer composition and the process is for repairing at least one defect in a thermoplastic polymer article, wherein the polymer composition comprises at least one heat-generating organic dye that generates heat above, for example at least 10°C above, the glass transition temperature of the thermoplastic polymer when exposed to a given range of red to near-infrared irradiation; the process comprising exposing the region of the article containing the at least one defect to red to near-infrared irradiation at a wavelength within the red to near-infrared range where the heat-generating organic dye generates heat above, for example at least 10°C above, the glass transition temperature of the thermoplastic polymer; thereby resulting in self-healing of the defect.

7. Process according to claim 6, wherein the at least one defect may include a crack, creep, a void, a hole, a distortion, a deformation, or a scratch.

8. Process according to claim 2, wherein the polymer composition is a composite polymer composition comprising a thermoplastic polymer and reinforcements or fillers, the threshold temperature is the glass transition temperature or the melting temperature of the polymer composition and the process is for recycling a composite thermoplastic polymer composition, on demand under the triggering action of red to near-infrared irradiation; the process comprising:
a) exposing the composite polymer composition to red to near-infrared irradiation at a wavelength within the red to near-infrared range where the heat-generating organic dye generates heat above, for example at least 10°C above, the glass transition temperature or the melting temperature of the polymer composition, thereby leading to fluidization of the polymer composition; and
b) separating the thermoplastic polymer and reinforcements or fillers from the fluid polymer composition produced in step a).

9. Process according to claim 2, wherein the threshold temperature is the depolymerization temperature of the polymer composition and the process is for recycling a polymer composition on demand under the triggering action of red to near-infrared irradiation; the process comprising:
a) exposing the polymer composition to red to near-infrared irradiation at a wavelength within the red to near-infrared range where the heat-generating organic dye generates heat above the depolymerization temperature of the polymer composition, thereby leading to depolymerization of the polymer composition into monomers; and
b) collecting the monomers produced in step a).

10. Process according to claim 2, wherein the threshold temperature is the decomposition temperature of the polymer composition, and the process is for separating two articles bonded by a polymer layer on demand under the triggering action of red to near-infrared irradiation; the process comprising:
a) providing two articles bonded together with a polymer layer;
b) exposing the bonding region between the two articles to red to near-infrared irradiation at a wavelength within the red to near-infrared range where the heat-generating organic dye generates heat above, for example at least 10°C above, the decomposition temperature of the polymer layer, thereby decomposing the polymer matrix in the bonding region between the two articles;
c) pulling apart the two articles to separation.

11. Process according to claim 1, wherein the polymer is a thermoplastic or thermosetting polymer.

12. Process according to claim 11, wherein the polymer is a thermoplastic polymer selected from polyacrylates, polymethacrylates such as poly(methyl methacrylate), polyacrylonitrile butadiene styrene terppolymer, nylon, polylactic acid, polybenzimidazole, polycarbonate, polyestersulfone, polyoxymethylene, polyetherether ketone, polyetherimide, polyethylene, polyphenylene oxide, polyphenylene sulfide, polypropylene, polystyrene, polyvinyl chloride, polyvinylidene fluoride, or teflon.

13. Process according to claim 11, wherein the polymer is a thermosetting polymer selected from epoxy resins, polyureas, phenolic resins, polyester resins, polyurethanes, polyimides, polycyanurates, or vinyl ester resins.

14. A process according to any one of the preceding claims, wherein the polymer comprises composite reinforcements or fillers.

15. A process according to claim 14, wherein the composite reinforcements of fillers are glass fibers, carbon fibers such as carbon fiber fabrics, aramid fibers, basalt fibers, silica fibers, metallic fillers such as metallic nanoparticles, polymer fibers, natural fibers or carbon-based fillers such as carbon black, biochar, carbon fibers, carbon fiber fabrics or carbon nanostructures (such as carbon nanotubes or graphene), or a mixture of two or more of those.

16. Process according to any one of the preceding claims, wherein the heat-generating organic dye is present in an amount ranging from 0.01-0.50 wt%, more preferably from 0.01-0.30 wt%, yet more preferably from 0.01-0.20 wt%, even more preferably from 0.01-0.10 wt%, most preferably from 0.05-0.10 wt%, based on the total weight of the polymer composition.

17. Process according to any one of the preceding claims, wherein the heat-generating organic dye is selected from cyanine dyes, squaraine or squarylium dyes, push-pull dyes, BODIPY or pyrromethene dyes, porphyrin dyes, copper complex dyes, or phthalocyanine dyes, adsorbing in the red to near-infrared region; preferably cyanine dyes or squaraine dyes.

18. Process according to claim 17, wherein the heat-generating organic dye is selected from any one or more of the following:

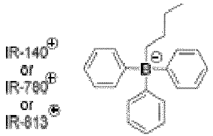

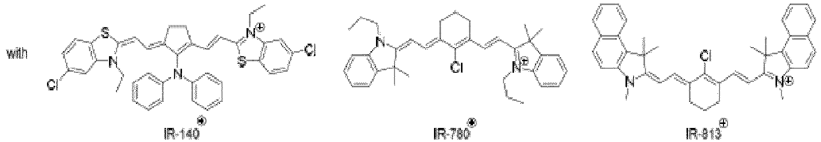

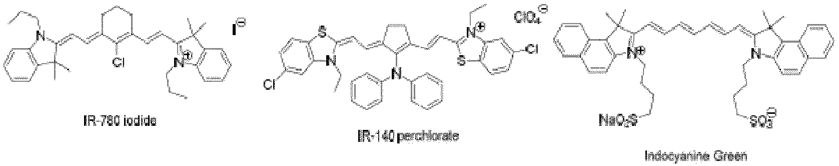

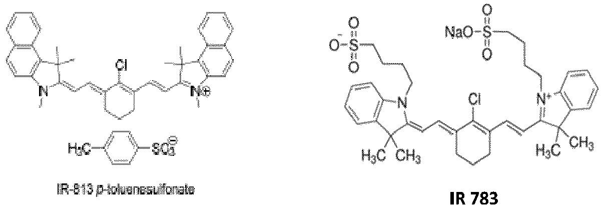

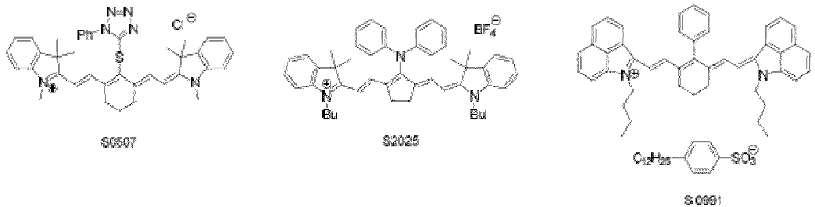

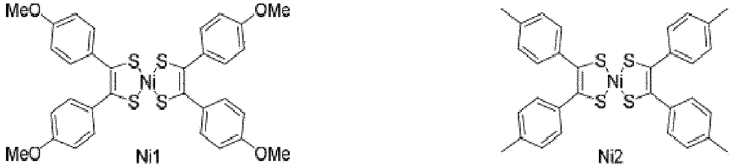

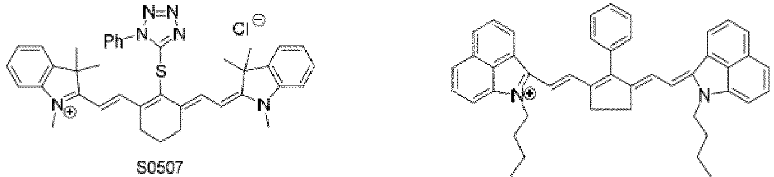

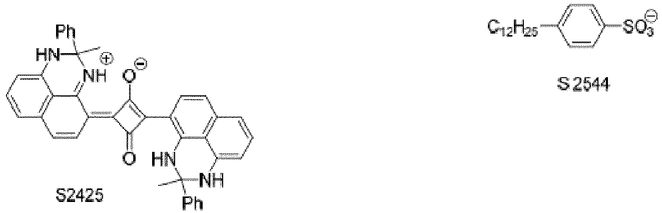

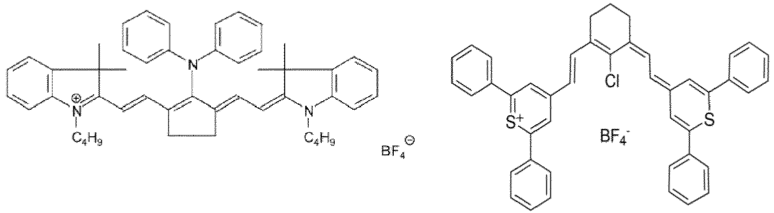

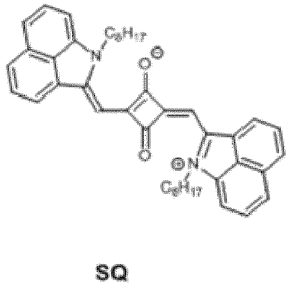

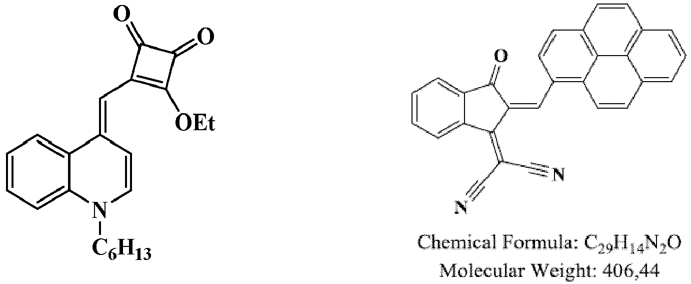

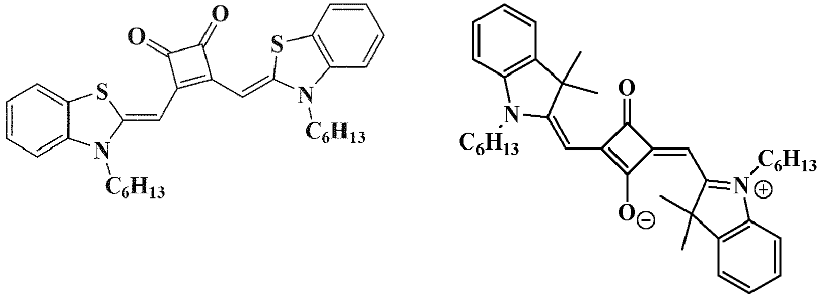

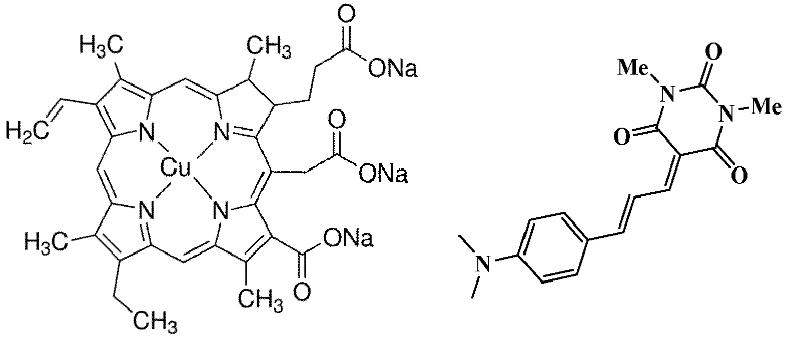

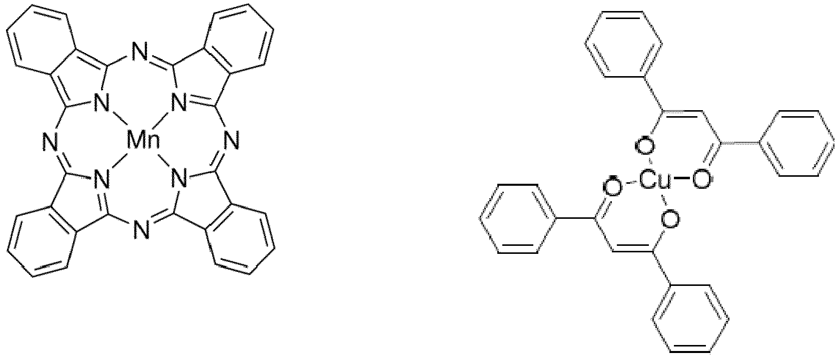

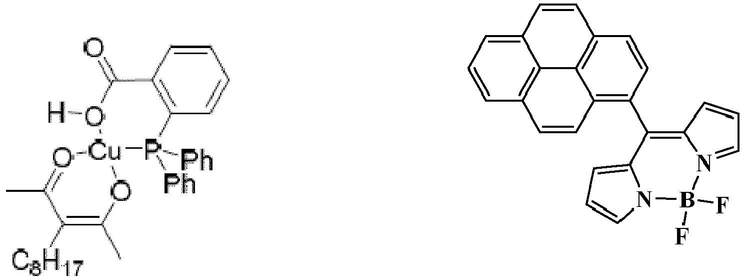

19. Process according to claim 17, wherein the heat-generating organic dye is

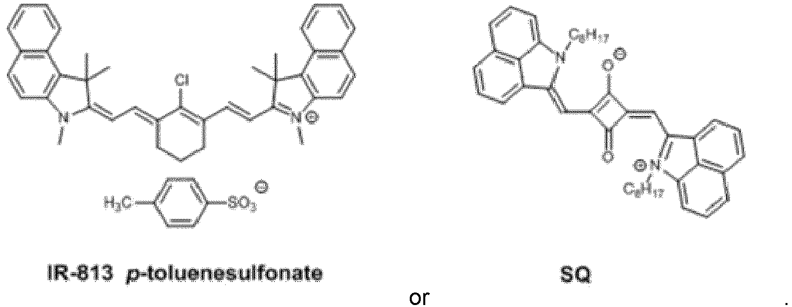

20. Use of a heat-generating organic dye adsorbing in the red to near-infrared, for:
- reshaping a thermoplastic polymer article;
- bonding together two thermoplastic polymer or elastomer articles;
- separating two pieces of a thermoplastic polymer or elastomer article;
- self-healing or self-repairing a thermoplastic polymer article;
- recycling a composite polymer composition;
- recycling or depolymerizing a polymer; and/or
- separating two articles bonded by a polymer layer.
